# EUROPEAN PATENT APPLICATION

(11) **EP 4 514 011 A1**
(43) Date of publication of application: **26.02.2025**
(21) Application number: 23814822.5
(22) Date of filing: 21.04.2023
(51) Int. Cl.: H04W 72/04

(54) **COMMUNICATION METHOD AND RELATED APPARATUS**

(30) Priority: 28.05.2022 CN 202210592543
(71) Applicant: Huawei Technologies Co., Ltd., Shenzhen, Guangdong 518129 (CN)
(72) Inventor: ZHANG, Yangyang, Shenzhen, Guangdong 518129 (CN); YU, Zheng, Shenzhen, Guangdong 518129 (CN)
(74) Representative: MERH-IP Matias Erny Reichl Hoffmann Patentanwälte PartG mbB
(86) International application number: PCT/CN2023/089851
(87) International publication number: WO 2023/231636

(57) **Abstract**

This application provides a communication method and a related apparatus. First configuration information may be for determining N first parameter sets and one second parameter set, and the first parameter set includes one or more parameters for determining a periodicity and/or an offset. In other words, an access network device may deliver the first parameter set in advance during initial configuration. When a frame rate of a video service changes, the access network device does not need to reconfigure all parameters, but delivers second configuration information indicating a terminal device to use at least one of the N first parameter sets. This reduces a delay, meets a delay requirement of the video service, avoids a problem that a delay of video service transmission exceeds a delay threshold, improves a network capacity, avoids repeated configuration of a same parameter, and reduces signaling overheads. In addition, the terminal device may monitor a channel and/or a signal based on the second parameter set and the at least one first parameter set. In this way, a packet loss problem is avoided.

## Description

This application claims priority to Chinese Patent Application No. 202210592543.1, filed with the China National Intellectual Property Administration on May 28, 2022 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

Currently, many services may be sent periodically. For example, an extended reality (extended reality, XR) video service may be sent periodically. Generally, a periodicity of a video service varies with a frame rate of the video service. To enable a terminal device to successfully receive a video service, a base station usually needs to configure discontinuous reception (discontinuous reception, DRX) configuration information for the terminal device, so that the terminal device monitors a channel based on the DRX configuration information. In some scenarios, the base station may need to reconfigure the DRX configuration information. For example, when a delay jitter or network congestion occurs, a frame rate of the video service changes. As a result, the base station needs to reconfigure the DRX configuration information. However, when reconfiguring the DRX configuration information, the base station usually reconfigures all parameters in the DRX configuration information. Consequently, the base station repeatedly configures some parameters. This causes more bit overheads and an extra delay. Therefore, when the base station needs to reconfigure the DRX configuration information, how to reduce the delay becomes an urgent technical problem to be resolved currently.

### SUMMARY

This application provides a communication method and a related apparatus, to reduce a delay.

According to a first aspect, a communication method is provided. The method includes: receiving first configuration information, where the first configuration information is for determining N first parameter sets and one second parameter set, the second parameter set is a common parameter set of the N first parameter sets, the first parameter set includes one or more parameters for determining a periodicity and/or an offset, and N is an integer greater than or equal to 2; receiving second configuration information, where the second configuration information indicates a terminal device to use at least one of the N first parameter sets; and monitoring a channel and/or a signal based on the second parameter set and the at least one first parameter set.

It can be learned that, in the foregoing technical solution, the first configuration information may be for determining N first parameter sets and one second parameter set, and the first parameter set includes one or more parameters for determining a periodicity and/or an offset. In other words, an access network device may deliver the first parameter set in advance during initial configuration. When a frame rate of a video service changes, the access network device does not need to reconfigure all parameters, but delivers second configuration information indicating a terminal device to use at least one of the N first parameter sets. This reduces a delay, meets a delay requirement of the video service, avoids a problem that a delay of video service transmission exceeds a delay threshold, improves a network capacity, avoids repeated configuration of a same parameter, and reduces signaling overheads. In addition, the terminal device may monitor a channel and/or a signal based on the second parameter set and the at least one first parameter set. In this way, a packet loss problem is avoided.

For example, with reference to the first aspect, the periodicity is a DRX cycle.

For example, with reference to the first aspect, the second configuration information is configured by using DCI signaling. It can be learned that, in the foregoing technical solution, the second configuration information is sent by using the DCI signaling, so that a delay is reduced and a network capacity is increased. In addition, overheads are reduced.

According to a second aspect, a communication method is provided. The method includes: receiving first configuration information, where the first configuration information is for determining one first parameter set and one second parameter set, and the first parameter set includes one or more parameters for determining a periodicity and/or an offset; receiving second configuration information, where the second configuration information is for determining one third parameter set, and the third parameter set includes one or more parameters for determining a periodicity and/or an offset; and monitoring a channel and/or a signal based on the second parameter set and the third parameter set, where the second parameter set is a common parameter set of the first parameter set and the third parameter set.

It can be learned that, in the foregoing technical solution, the first configuration information is for determining one first parameter set and one second parameter set, and the first parameter set includes a periodicity and/or an offset. In other words, an access network device configures one first parameter set and one second parameter set during initial configuration. When a frame rate of a video service changes, the access network device sends second configuration information for determining one third parameter set, where the third parameter set includes a periodicity and/or an offset. In other words, the access network device configures only a parameter that needs to be updated. This avoids repeated parameter configuration, that is, avoids repeated configuration of a same parameter, reduces signaling overheads and reduces a delay, meets a delay requirement of the video service, avoids a problem that a delay of video service transmission exceeds a delay threshold, and improves a network capacity. In addition, the terminal device may monitor a channel and/or a signal based on the second parameter set and the third parameter set. In this way, a packet loss problem is avoided.

For example, with reference to the second aspect, a periodicity in the first parameter set and a periodicity in the third parameter set are DRX cycles.

For example, with reference to the second aspect, the second configuration information is configured by using DCI signaling. It can be learned that, in the foregoing technical solution, the second configuration information is sent by using the DCI signaling, so that a delay is reduced and a network capacity is increased. In addition, overheads are reduced.

According to a third aspect, a communication method is provided. The method includes: receiving first configuration information, where the first configuration information includes M parameters, and M is an integer greater than or equal to 1; receiving second configuration information, where the second configuration information includes L parameters, L is an integer greater than or equal to 1, and the M parameters and the L parameters are for determining an active period in a first time domain resource; and monitoring a channel and/or a signal in the active period.

It can be learned that, in the foregoing technical solution, at a same time point, an active period of a terminal device may be jointly determined based on a plurality of parameters from different configuration information, so that DRX parameter configuration is more flexible, and this further facilitates matching between the XR video service and the DRX technology.

For example, with reference to the third aspect, the M parameters are included in a first parameter group, and the L parameters are included in a second parameter group; and parameters included in the first parameter group are completely different from parameters included in the second parameter group, or parameters included in the first parameter group are partially different from parameters included in the second parameter group.

It can be learned that, in the foregoing technical solution, a manner in which a plurality of values of a same parameter are allowed to take effect simultaneously at a same moment makes DRX parameter configuration more flexible, and further facilitates matching between the XR video service and the DRX technology.

For example, with reference to the third aspect, a periodicity included in the first parameter group is the same as a periodicity included in the second parameter group, or a periodicity included in the first parameter group is different from a periodicity included in the second parameter group; and/or an offset included in the first parameter group is different from an offset included in the second parameter group.

It can be learned that, in the foregoing technical solution, a manner in which a plurality of values of a same parameter are allowed to take effect simultaneously at a same moment makes DRX parameter configuration more flexible, and further facilitates matching between the XR video service and the DRX technology.

According to a fourth aspect, a communication method is provided. The method includes: sending capability information, where the capability information is for determining that a terminal device supports a case that one piece of configuration information corresponds to one periodicity, or the capability information is for determining that a terminal device supports a case that one piece of configuration information corresponds to a plurality of periodicities; receiving first configuration information, where the first configuration information is for determining a parameter; and monitoring a channel and/or a signal based on a parameter in the first configuration information.

It can be learned that, in the foregoing technical solution, after the terminal device reports the capability information, an access network device may learn of a capability supported by the terminal device, so that configured configuration information can meet a requirement of the terminal device. This also avoids an increase in a data processing error rate and an increase in a data packet transmission delay that are caused because the configuration information is out of a capability range of the terminal device.

For example, with reference to the fourth aspect, the capability information is further for determining that the terminal device supports at least one of the following: there are a plurality of discontinuous active periods in a periodicity; K parameter groups, where parameters in the K parameter groups are for determining an active period in a first time domain resource, there are at least two parameter groups in the K parameter groups, and parameters included in one of the two parameter groups are completely different from parameters included in the other parameter group, or parameters included in one of the two parameter groups are partially different from parameters included in the other parameter group; a periodicity included in the parameter in the first configuration information is determined based on a first periodicity and an offset of the first periodicity; and the parameter in the first configuration information is predefined.

It can be learned that, in the foregoing technical solution, after the terminal device reports the capability information, an access network device may learn of a capability supported by the terminal device, so that configuration information configured by the access network device can meet a requirement of the terminal device. This avoids an increase in a data processing error rate and an increase in a data packet transmission delay that are caused because the configuration information is out of the capability range of the terminal device.

For example, with reference to the fourth aspect, the capability information is further for determining whether the terminal device supports at least one of the following: there are a plurality of discontinuous active periods in a periodicity; K parameter groups, where parameters in the K parameter groups are for determining an active period in a first time domain resource, there are at least two parameter groups in the K parameter groups, and parameters included in one of the two parameter groups are completely different from parameters included in the other parameter group, or parameters included in one of the two parameter groups are partially different from parameters included in the other parameter group; a periodicity included in the parameter in the first configuration information is determined based on a first periodicity and an offset of the first periodicity; and the parameter in the first configuration information is predefined.

It can be learned that, in the foregoing technical solution, after the terminal device reports the capability information, an access network device may learn of a capability supported and/or a capability not supported by the terminal device, so that configuration information configured by the access network device can meet a requirement of the terminal device. This also avoids an increase in a data processing error rate and an increase in a data packet transmission delay that are caused because the configuration information is out of the capability range of the terminal device.

For example, with reference to the fourth aspect, a periodicity included in one of the two parameter groups is different from a periodicity included in the other parameter group, or a periodicity included in one of the two parameter groups is the same as a periodicity included in the other parameter group; and/or an offset included in one of the two parameter groups is different from an offset included in the other parameter group.

For example, with reference to the fourth aspect, the capability information is further for determining at least one of the following: a frame rate of a video service supported by the terminal device; a minimum frame rate of a video service supported by the terminal device; and a maximum frame rate of a video service supported by the terminal device.

It can be learned that, in the foregoing technical solution, after the terminal device reports at least one of the following: a frame rate of a video service supported by the terminal device; a minimum frame rate of a video service supported by the terminal device; and a maximum frame rate of a video service supported by the terminal device, configuration information configured by an access network device can meet a requirement of the terminal device. This also avoids an increase in a data processing error rate and an increase in a data packet transmission delay that are caused because the configuration information is out of the capability range of the terminal device.

According to a fifth aspect, a communication method is provided. The method includes: sending first configuration information, where the first configuration information is for determining N first parameter sets and one second parameter set, the second parameter set is a common parameter set of the N first parameter sets, the first parameter set includes one or more parameters for determining a cycle and/or an offset, and N is an integer greater than or equal to 2; and sending second configuration information, where the second configuration information indicates a terminal device to use at least one of the N first parameter sets.

For example, with reference to the fifth aspect, the periodicity is a discontinuous reception DRX cycle.

For example, with reference to the fifth aspect, the second configuration information is configured by using downlink control information DCI signaling.

According to a sixth aspect, a communication method is provided. The method includes: sending first configuration information, where the first configuration information is for determining one first parameter set and one second parameter set, and the first parameter set includes one or more parameters for determining a periodicity and/or an offset; and sending second configuration information, where the second configuration information is for determining one third parameter set, the third parameter set includes one or more parameters for determining a periodicity and/or an offset, and the second parameter set is a common parameter set of the first parameter set and the third parameter set.

For example, with reference to the sixth aspect, a periodicity in the first parameter set and a periodicity the third parameter set are discontinuous reception DRX cycles.

For example, with reference to the sixth aspect, the second configuration information is configured by using downlink control information DCI signaling.

According to a seventh aspect, a communication method is provided. The method includes: sending first configuration information, where the first configuration information includes M parameters, and M is an integer greater than or equal to 1; and sending second configuration information, where the second configuration information includes L parameters, L is an integer greater than or equal to 1, and the M parameters and the L parameters are for determining an active period in a first time domain resource.

For example, with reference to the seventh aspect, the M parameters are included in a first parameter group, and the L parameters are included in a second parameter group; and parameters included in the first parameter group are completely different from parameters included in the second parameter group, or parameters included in the first parameter group are partially different from parameters included in the second parameter group.

For example, with reference to the seventh aspect, a periodicity included in the first parameter group is the same as a periodicity included in the second parameter group, or a periodicity included in the first parameter group is different from a periodicity included in the second parameter group; and/or an offset included in the first parameter group is different from an offset included in the second parameter group.

According to an eighth aspect, a communication method is provided. The method includes: receiving capability information, where the capability information is for determining that a terminal device supports a case that one piece of configuration information corresponds to one periodicity, or the capability information is for determining that a terminal device supports a case that one piece of configuration information corresponds to a plurality of periodicities; and sending first configuration information based on the capability information, where the first configuration information is for determining a parameter.

For example, with reference to the eighth aspect, the capability information is further for determining that the terminal device supports at least one of the following: there are a plurality of discontinuous active periods in a periodicity; K parameter groups, where parameters in the K parameter groups are for determining an active period in a first time domain resource, there are at least two parameter groups in the K parameter groups, and parameters included in one of the two parameter groups are completely different from parameters included in the other parameter group, or parameters included in one of the two parameter groups are partially different from parameters included in the other parameter group; a periodicity included in the parameter in the first configuration information is determined based on a first periodicity and an offset of the first periodicity; and the parameter in the first configuration information is predefined.

For example, with reference to the eighth aspect, the capability information is further for determining whether the terminal device supports at least one of the following: there are a plurality of discontinuous active periods in a periodicity; K parameter groups, where parameters in the K parameter groups are for determining an active period in a first time domain resource, there are at least two parameter groups in the K parameter groups, and parameters included in one of the two parameter groups are completely different from parameters included in the other parameter group, or parameters included in one of the two parameter groups are partially different from parameters included in the other parameter group; a periodicity included in the parameter in the first configuration information is determined based on a first periodicity and an offset of the first periodicity; and the parameter in the first configuration information is predefined.

For example, with reference to the eighth aspect, a periodicity included in one of the two parameter groups is different from a periodicity included in the other parameter group, or a periodicity included in one of the two parameter groups is the same as a periodicity included in the other parameter group; and/or an offset included in one of the two parameter groups is different from an offset included in the other parameter group.

For example, with reference to the eighth aspect, the capability information is further for determining at least one of the following: a frame rate of a video service supported by the terminal device; a minimum frame rate of a video service supported by the terminal device; and a maximum frame rate of a video service supported by the terminal device.

According to a ninth aspect, a communication apparatus is provided. The communication apparatus includes a module configured to perform the method according to any one of the first aspect to the eighth aspect.

According to a tenth aspect, a communication apparatus is provided. The communication apparatus includes a processor. The processor invokes a computer program stored in a memory to implement the method according to any one of the first aspect to the eighth aspect.

In a possible design, the communication apparatus may be a chip or a device including a chip that performs the method according to any one of the first aspect to the eighth aspect.

According to an eleventh aspect, a communication apparatus is provided. The communication apparatus includes a logic circuit and an input/output interface. The logic circuit is configured to read and execute stored instructions. When the instructions are run, the communication apparatus is enabled to perform the method according to any one of the first aspect to the eighth aspect.

According to a twelfth aspect, a computer-readable storage medium is provided. The computer-readable storage medium stores a computer program. When the computer program is run, the method according to any one of the first aspect to the eighth aspect is implemented.

According to a thirteenth aspect, a computer program product including instructions is provided. When the instructions are executed on a computer, the method according to any one of the first aspect to the eighth aspect is performed.

According to a fourteenth aspect, a communication system is provided. The communication system includes one or more of the following: a terminal device that performs the method according to any one of the first aspect to the fourth aspect, and an access network device that performs the method according to any one of the fifth aspect to the eighth aspect.

### BRIEF DESCRIPTION OF DRAWINGS

FIG. 1 shows a DRX cycle;
FIG. 2 shows different applications of XR;
FIG. 3 shows a periodicity of a video service with a frame rate of 60 fps;
FIG. 4 shows a basic architecture of a communication system according to an embodiment of this application;
FIG. 5 is a schematic of a hardware structure of a communication apparatus applicable to an embodiment of this application;
FIG. 6 is a schematic of mismatch between a DRX cycle and a periodicity of a video frame;
FIG. 7 is another schematic of mismatch between a DRX cycle and a periodicity of a video frame;
FIG. 8 is a schematic of a frame rate change of XR video frames;
FIG. 9 is a schematic flowchart of a communication method according to an embodiment of this application;
FIG. 10 is a schematic flowchart of another communication method according to an embodiment of this application;
FIG. 11 is a schematic flowchart of another communication method according to an embodiment of this application;
FIG. 12 is a schematic flowchart of another communication method according to an embodiment of this application;
FIG. 13 is a schematic of a structure of a communication apparatus according to an embodiment of this application;
FIG. 14 is a simplified schematic of a structure of a terminal device according to an embodiment of this application; and
FIG. 15 is a simplified schematic of a structure of an access network device according to an embodiment of this application.

### DESCRIPTION OF EMBODIMENTS

The following describes the technical solutions in embodiments of this application with reference to the accompanying drawings in embodiments of this application. The terms "system" and "network" may be used interchangeably in embodiments of this application. "/" represents an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one of a, b, or c may represent a, b, c, a and b, a and c, b and c, or a, b, and c, where a, b, and c may be singular or plural. In addition, to clearly describe the technical solutions in embodiments of this application, the terms such as "first" and "second" are used in embodiment of this application to distinguish between same items or similar items that provide basically same network elements or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The objectives, technical solutions, and beneficial effects of this application are further described in detail in the following specific implementations. It should be understood that the following descriptions are merely specific implementations of this application, but are not intended to limit the protection scope of this application. Any modification, equivalent replacement, or improvement made based on technical solutions of this application shall fall within the protection scope of this application.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The following explains and describes some nouns (or communication terms) in this application. It may be understood that when the following terms are used in other parts of this application, no explanation or description is provided subsequently.

### 1. DRX mechanism

To reduce power consumption of a terminal device, the DRX mechanism is introduced. The terminal device turns on a receiver only in a necessary time period to receive downlink data and signaling, and turns off the receiver in other time periods to stop receiving the downlink data and signaling. In this way, the terminal device does not need to continuously monitor a physical downlink control channel (Physical Downlink Control Channel, PDCCH), so that the power consumption of the terminal device can be reduced to prolong use time of the terminal device.

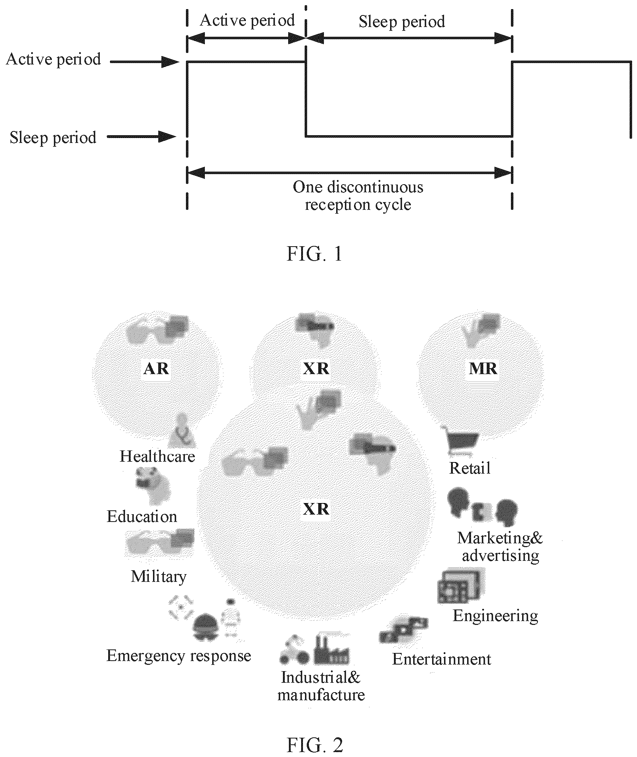

In a DRX operating mode, the terminal device needs to periodically turn on the receiver to monitor possible downlink data and signaling that may arrive. A time period in which the terminal device turns on the receiver and monitors the PDCCH channel is referred to as on time (on duration time), or may be referred to as a wake-up period, wake-up time, an active period, or on duration. Duration of the time period is set by using a DRX on duration timer (drx on duration timer) field configured by using radio resource control (radio resource control, RRC) signaling. FIG. 1 shows a DRX cycle. As shown in FIG. 1, the DRX cycle may be divided into an active period and a sleep period (opportunity for DRX) based on states. A time period in which the terminal device turns off the receiver and does not monitor the PDCCH channel is referred to as a sleep period, or may be referred to as sleep time. In a possible implementation, the DRX cycle includes one active period, and the DRX cycle may further include one sleep period. In other words, a period after the active period may not necessarily a sleep period, and may still be an active period. The active period may include running time of a DRX-related timer, for example, a DRX on duration timer, a DRX inactivity timer (drx inactivity timer), a DRX short cycle timer (drx short cycle timer), a DRX downlink retransmission timer (drx retransmission timer DL), a DRX uplink retransmission timer (drx retransmission timer UL), a DRX downlink hybrid automatic repeat request round trip time timer (drx HARQ RTT timer DL), and a DRX uplink hybrid automatic repeat request round trip time timer (drx HARQ RTT timer UL). For a function, starting, timing, stopping, a setting of expiration, and a value range of each timer, refer to Table 1. Details are not described herein.

**Table 1**

| DRX parameters (DRX parameters) | Definition (definition) | Description (description) |
|---|---|---|
| DRX on duration timer | Function | The timer is started at the beginning of each DRX cycle. The terminal device monitors the PDCCH in running time of the timer |
| | Starting | The timer is started at a start offset of the DRX cycle, in other words, at a moment of the start offset (DRX start offset). |
| | Timing | The timing is based on a slot or millisecond (ms), where a minimum unit is 1 ms or 1/32 ms. |
| | Stopping | The timer is stopped when the terminal device receives a DRX command media control element (DRX command MCE) or when the timer expires. |
| | Expiration | When the timer overflows, the terminal device may enter a sleep period. |
| | Value range | 1/32 ms, 2/32 ms, ..., 31/32 ms, 1 ms, 2 ms, 3 ms, 4 ms, 5 ms, 6 ms, 8 ms, 10 ms, 20 ms, 30 ms, 40 ms, 50 ms, 60 ms, 80 ms, 100 ms, 200 ms, 300 ms, 400 ms, 500 ms, 600 ms, 800 ms, 1000 ms, 1200 ms, and 1600 ms |
| DRX inactivity timer | Function | The timer is for determining whether an active period of the terminal device is prolonged due to arrival of new data, and may provide a time reference for the terminal device to use a DRX short cycle. In running time of the DRX on duration timer, if the terminal device learns, from scheduling information on the PDCCH channel, that uplink or downlink initial transmission is to be started, the terminal device starts the DRX inactivity timer. Before the DRX inactivity timer expires, the terminal device continuously monitors the PDCCH, and restarts the DRX inactivity timer if new initial transmission occurs. Therefore, the DRX inactivity timer can be repeatedly restarted for continuous data transmission, so that the active period is prolonged. |
| | Starting | The timer is started or restarted when the terminal device successfully decodes the PDCCH and learns that there is initial transmission data (an uplink grant or downlink data indication) related to the terminal device. |
| | Timing | The timing is based on a quantity of consecutive PDCCH subframes. |
| | Stopping | The timer is stopped when the terminal device receives a DRX command media control element; or the timer is stopped when the timer expires; or if a DRX short cycle is configured and the timer expires, the terminal device enters the DRX short cycle; or if a DRX short cycle is not configured, the terminal device enters a DRX long cycle. |
| | Expiration | If the DRX short cycle is configured, the DRX short cycle timer is started or restarted after the timer expires; or if no DRX short cycle is configured, the DRX long cycle continues to be used. |
| | Value range | 0 ms, 1 ms, 2 ms, 3 ms, 4 ms, 5 ms, 6 ms, 8 ms, 10 ms, 20 ms, 30 ms, 40 ms, 50 ms, 60 ms, 80 ms, 100 ms, 200 ms, 300 ms, 500 ms, 750 ms, 1280 ms, 1920 ms, and 2560 ms |
| DRX short cycle timer | Function | The timer identifies a quantity of consecutive repetition times after entering a DRX short cycle. |
| | Starting | If the DRX short cycle is configured, and the DRX on duration timer expires, the DRX short cycle timer is started or restarted; or when the terminal device receives a DRXcommand media control element, if the DRX short cycle is configured, the DRX short cycle timer is started or restarted; and the short cycle is used when the DRX short cycle timer is started. |
| | Timing | The timing is based on a quantity of repetition times of the short cycle. |
| | Stopping | The timer is stopped when the timer expires. |
| | Expiration | The timing is stopped, and the DRX long cycle is used. |
| | Value range | 2 ms, 3 ms, 4 ms, 5 ms, 6 ms, 7 ms, 8 ms, 10 ms, 14 ms, 16 ms, 20 ms, 30 ms, 32 ms, 35 ms, 40 ms, 64 ms, 80 ms, 128 ms, 160 ms, 256 ms, 320 ms, 512 ms, and 640 ms |
| DRX downlink retransmission timer/DRX uplink retransmission timer | Function | The timer defines duration in which the terminal device waits for retransmission in an active period. If the timer expires and the terminal device still receives no downlink/uplink retransmitted data, the terminal device no longer receives the retransmitted data. |
| | Starting | If the DRX downlink retransmission timer/DRX uplink retransmission timer expires but no acknowledgment (acknowledgement, ACK) feedback of corresponding downlink/uplink data is received, the timer is started or restarted. |
| | Timing | The timing is based on a quantity of consecutive PDCCH subframes. |
| | Stopping | If the retransmitted data is received before the timer expires, the timer is stopped. |
| | Expiration | The timing is stopped, and the terminal device does not perform other operations. |
| | Value range | 10s, 11s, 12s, 14s, 16s, 18s, 116s, 124s, 133s, 140s, 164s, 180s, 196s, 1112s, 1128s, 1160s, and 1320s |
| DRX downlink hybrid automatic repeat request round trip time timer/DRX uplink hybrid automatic repeat request round trip time timer | Function | The timer is for determining when to start the DRX downlink retransmission timer/DRX uplink retransmission timer. The timer indicates a quantity of subframes, starting from a subframe in which a downlink data packet/an uplink data packet occurs, after which retransmission is performed if an error occurs and the data packet needs to be retransmitted. |
| | Starting | The terminal device starts the timer at a start location of a next subframe in which semi-persistent downlink/uplink data transmission may exist; or when learning, by performing detection on a PDCCH, that a subframe for new downlink data transmission exists in a HARQ process of the terminal device, the terminal device stops a DRX downlink retransmission timer corresponding to the HARQ process, and starts a DRX downlink retransmission timer at the same time; or when learning, by performing detection on a PDCCH, that a subframe for new uplink data transmission exists in a HARQ process of the terminal device, the terminal device stops a DRX uplink retransmission timer corresponding to the HARQ process, and starts a DRX uplink retransmission timer. |
| | Timing | The timing is based on a quantity of subframes. |
| | Stopping | The timer is stopped when the timer expires. |
| | Expiration | The timing is stopped and whether downlink/uplink data is received correctly is to be determined, and if the downlink/uplink data is received correctly, no operation is performed; |
| | | or if the data is incorrectly received, the DRX downlink retransmission timer or DRX uplink retransmission timer performs data retransmission. |
| | Value range | Integer(0..56) |

After the terminal device enters a DRX operating mode, it does not mean that the terminal device immediately enters a DRX cycle. Only when a preset condition is met, the terminal device immediately starts the DRX on duration timer to enter the DRX cycle. DRX cycles may be classified into a long DRX cycle and a short DRX cycle based on types. In this application, the long DRX cycle may also be referred to as a DRX long cycle or a long cycle, and the short DRX cycle may also be referred to as a DRX short cycle or a short cycle. The long DRX cycle is used as an example. An access network device configures the DRX long cycle and a start offset by using RRC signaling, and determines, based on a system frame (system frame number, SFN) and a subframe of the system frame, a moment for starting the DRX on duration timer. That is, a preset condition for entering the active period when the long DRX cycle is run is as follows: drxStartOffset=[(SFN×10)+subframe number (subframe number)] modulo (long DRX cycle), where SFN represents a system frame number, and drx start offset represents an offset of the active period, and indicates a specific time unit (for example, a subframe) in a DRX cycle in which the DRX on duration timer is started to enter the active period. Similarly, a preset condition for entering the active period when the short DRX cycle runs is as follows: when [(SFN×10)+subframe number] modulo (short DRX cycle)=(drxStartOffset) modulo (short DRX cycle), the short DRX cycle is started.

DRX may be used in an RRC connected mode (C-DRX) or an RRC idle mode (I-DRX). It should be noted that a C-DRX mechanism is mainly for controlling a PDCCH scrambled by using a radio network temporary identifier (radio network temporary identifier, RNTI), for example, a cell radio network temporary identifier (cell RNTI, C-RNTI), a semi-persistent scheduling channel state information radio network temporary identifier (semi-persistent scheduling channel state information RNTI, SPS-CSI-RNTI), a transmit power control physical uplink control channel radio network temporary identifier (transmit power control physical uplink control channel RNTI, TPC-PUCCH-RNTI), a transmit power control physical uplink shared channel radio network temporary identifier (transmit power control physical uplink shared channel RNTI, TPC-PUSCH-RNTI), or a transmit power control sounding reference signal radio network temporary identifier (transmit power control sounding reference signal RNTI, TPC-SRS-RNTI). In the sleep period, the terminal device does not monitor the foregoing PDCCH scrambled by using the RNTI. PDCCHs scrambled by using a system information radio network temporary identifier (system information RNTI, SI-RNTI), a random access radio network temporary identifier (random access RNTI, RA-RNTI), and a temporary cell radio network temporary identifier (temporary CRNTI, T-CRNTI) are not constrained by the C-DRX mechanism.

### 2. DRX cycle mode (pattern)

The DRX cycle mode may be referred to as a DRX cycle pattern, or the like. One DRX cycle mode may include one or more DRX cycles. For example, refer to Table 2. With reference to Table 2, it can be learned that when a frame rate is 30, one DRX cycle mode includes three DRX cycles, the three DRX cycles are 33 ms, 33 ms, and 34 ms respectively, and three start offsets are 0 ms, 33 ms, and 66 ms respectively. The rest is similar to this example, and details are not described herein again.

**Table 2**

| Frame rate (fps) | DRX cycle in the DRX cycle mode (ms) | Start offset (ms) |
|---|---|---|
| 30 | [33, 33, 34] | [0, 33, 66] |
| 60 | [16, 17, 17] | [0, 16, 33] |
| 90 | [11, 11, 11, 11, 11, 11, 11, 11, 12] | [0, 11, 22, 33, 44, 55, 66, 77, 88] |
| 120 | [8, 8, 9] | [0, 8, 16] |

The start offset may be a subframe. In this application, the start offset may be referred to as a start position, a relative start offset, a relative start position, or the like. For example, the start offset may be indicated by a start offset in a DRX long cycle start offset (drx long cycle start offset), and a long DRX cycle (long DRX cycle) in the DRX long cycle start offset may further indicate the DRX cycle. That is, the DRX long cycle start offset may indicate the DRX cycle and the start offset.

For example, one DRX cycle mode corresponds to one frame rate. DRX cycles in DRX cycle modes corresponding to different frame rates are different, and start offsets in DRX cycle modes corresponding to different frame rates are different.

### 3. Parameter set

In this application, a first parameter set includes one or more parameters for determining a periodicity and/or an offset. In other words, the first parameter set includes a parameter for determining the periodicity, and/or the first parameter set includes another parameter for determining the offset. The offset may be referred to as a start offset. In a possible implementation, the periodicity may be understood as a parameter, and the offset may be understood as another parameter. In another possible implementation, the periodicity may be understood as a value of a parameter, and the offset may be understood as a value of another parameter. The periodicity and the offset may be values of a same parameter. For example, a DRX long cycle start offset may indicate a DRX cycle and an offset.

For a DRX mechanism, the first parameter set includes a parameter for determining a DRX cycle, and/or the first parameter set includes another parameter for determining an offset. For a semi-persistent scheduling (semi persistent scheduling, SPS) mechanism and a configuration grant (configured grant, CG) mechanism, the first parameter set includes a parameter for determining a periodicity (periodicity). For a search space set (search space set, SSS) mechanism, PDCCH monitoring, or the like, the first parameter set includes a parameter for determining a monitoring periodicity, and/or the first parameter set includes another parameter for determining an offset.

For example, there may be one or more periodicities in one first parameter set. That there are a plurality of periodicities in one first parameter set may be understood as that the periodicities in one first parameter set are periodicities included in one cycle mode. When there are a plurality of periodicities in one first parameter set, the plurality of periodicities in the first parameter set may be completely the same, or partially the same, or completely different. In this application, in a possible implementation, that the plurality of periodicities are completely the same, or partially the same, or completely different may be understood as that lengths of the plurality of periodicities are completely the same, or partially the same, or completely different. In another possible implementation, for the DRX mechanism, that the plurality of periodicities are completely the same, or partially the same, or completely different may be understood as that long DRX cycles indicated by a plurality of DRX long cycle offsets are completely the same, or partially the same, or completely different.

For example, there may be one or more offsets in one first parameter set. That there are a plurality of offsets in one first parameter set may be understood as that the offsets in one first parameter set are offsets included in one cycle mode. When there are a plurality of offsets in one first parameter set, the plurality of offsets in the first parameter set may be completely the same, or partially the same, or completely different.

For example, a DRX cycle A1 and an offset are respectively 34 ms and 0 ms, a DRX cycle A2 and an offset are respectively 33 ms and 33 ms, and a DRX cycle A3 and an offset are respectively 34 ms and 66 ms. It can be learned that the DRX cycle A3 is different from the DRX cycle A1 and the DRX cycle A2, and the DRX cycle A1 and the DRX cycle A2 are the same, that is, the DRX cycles in the three DRX cycles are partially the same, and the three offsets are completely different.

For another example, a DRX cycle A4, a DRX cycle A5, and a DRX cycle A6 are 50 ms, and offsets of the DRX cycle A4, the DRX cycle A5, and the DRX cycle A6 are 0 ms, 33 ms, and 66 ms respectively. It can be learned that the DRX cycle A4, the DRX cycle A5, and the DRX cycle A6 are completely the same, and the three offsets are completely different.

For another example, a DRX cycle A7 and a DRX cycle A8 are respectively 16 ms and 17 ms, and offsets of the DRX cycle A7 and the DRX cycle A8 are respectively 0 ms and 16 ms. The DRX cycle A7 and the DRX cycle A8 are different, and the three offsets are different.

For another example, for a video service of 30 fps, a DRX cycle A9 is 33 ms, and an offset of the DRX cycle A9 is 0 ms; and for a video service with a frame rate of 60 fps, a DRX cycle A10 is 16 ms, and an offset of the DRX cycle A10 is 0 ms. The DRX cycle A9 and the DRX cycle A10 are different, but the two offsets are the same.

In a possible implementation, when there are a plurality of periodicities and/or offsets in one first parameter set, the periodicities and/or offsets in the first parameter set may be grouped into one or more parameter groups. That is, the first parameter set includes one or more parameter groups, and one parameter group in the first parameter set may include one or more periodicities, and/or an offset of one or more periodicities. For example, the plurality of periodicities in the parameter group may be completely the same, or partially the same, or completely different, and a plurality of offsets in the parameter group may be completely the same, or partially the same, or completely different. For example, quantities of periodicities in different parameter groups in the first parameter set may be completely the same, or partially the same, or completely different.

For example, the first parameter set includes a DRX parameter group B1, a DRX parameter group B2, and a DRX parameter group B3. For a video service of 60 fps, a DRX cycle and an offset in the DRX parameter group B1 are 16 ms and 0 ms respectively; a DRX cycle and an offset in the DRX parameter group B2 are 17 ms and 16 ms respectively; and a DRX cycle and an offset in the DRX parameter group B3 are 17 ms and 33 ms respectively. It can be learned that each of the DRX parameter group B1, the DRX parameter group B2, and the DRX parameter group B3 has only one DRX cycle, the DRX cycle in the DRX parameter group B1 is different from the DRX cycles in the DRX parameter group B 1 and the DRX parameter group B2, and the DRX cycles in the DRX parameter group B 1 and the DRX parameter group B2 are the same, that is, the DRX cycles in the three parameter groups are partially the same. The offsets in the three parameter groups are completely different. Quantities of DRX cycles in the three parameter groups are the same.

For another example, the first parameter set includes a DRX parameter group B4 and a DRX parameter group B5. For a video service of 120 fps, DRX cycles in the DRX parameter group B4 are respectively 8 ms, 8 ms, and 9 ms, and offsets in the DRX parameter group B4 are respectively 0 ms, 8 ms, and 16 ms. For a video service of 30 fps, DRX cycles in the DRX parameter group B5 are respectively 33 ms, 33 ms, and 34 ms, and offsets in the DRX parameter group B5 are respectively 0 ms, 33 ms, and 66 ms. It can be learned that the DRX parameter group B4 and the DRX parameter group B5 each have three DRX cycles, the DRX cycles in the DRX parameter group B4 and the DRX parameter group B5 are different, and the offsets in the DRX parameter group B4 and the DRX parameter group B5 are partially the same. Quantities of DRX cycles in the three parameter groups are the same.

For another example, the first parameter set includes a DRX parameter group B6, a DRX parameter group B7, and a DRX parameter group B8. For a video service of 120 fps, DRX cycles in the DRX parameter group B6 are respectively 8 ms, 8 ms, and 9 ms, and offsets in the DRX parameter group B6 are respectively 0 ms, 8 ms, and 16 ms. For a video service of 30 fps, DRX cycles in the DRX parameter group B7 are respectively 33 ms, 33 ms, and 34 ms, and offsets in the DRX parameter group B7 are respectively 0 ms, 33 ms, and 66 ms. DRX cycles in the DRX parameter group B8 are respectively 11 ms, 11 ms, 11 ms, 11 ms, 11 ms, 11 ms, 11 ms, 11 ms, and 12 ms, and offsets in the DRX parameter group B8 are respectively 0 ms, 11 ms, 22 ms, 33 ms, 44 ms, 55 ms, 66 ms, 77 ms, and 88 ms. It can be learned that the DRX parameter group B6 and the DRX parameter group B7 each have three DRX cycles, and the DRX parameter group B8 has nine DRX cycles, that is, quantities of DRX cycles in different DRX parameter groups are partially the same. The DRX cycles in the three DRX parameter groups are different, but the offsets in the three DRX parameter groups are partially the same.

For another example, the first parameter set includes a DRX parameter group B9 and a DRX parameter group B10. For a video service of 120 fps, DRX cycles in the DRX parameter group B9 are respectively 8 ms, 8 ms, and 9 ms, and offsets in the DRX parameter group B9 are respectively 0 ms, 8 ms, and 16 ms. DRX cycles in the DRX parameter group B 10 are respectively 11 ms, 11 ms, 11 ms, 11 ms, 11 ms, 11 ms, 11 ms, 11 ms, and 12 ms, and offsets in the DRX parameter group B 10 are respectively 0 ms, 11 ms, 22 ms, 33 ms, 44 ms, 55 ms, 66 ms, 77 ms, and 88 ms. It can be learned that the DRX parameter group B9 has three DRX cycles, and the DRX parameter group B 10 has nine DRX cycles, that is, quantities of DRX cycles in different DRX parameter groups are different. The DRX cycles in the two DRX parameter groups are different, but the offsets in the two DRX parameter groups are partially the same.

It should be understood that in this application, each time an access network device configures a parameter, a value of a parameter in the first parameter set changes once, and a value of a parameter in a second parameter set remains unchanged.

For example, before the access network device reconfigures the parameter set, for a video service of 60 fps, offsets included in the first parameter set are respectively X ms and Y ms, and a DRX on duration timer and a DRX inactivity timer included in the second parameter set are respectively Z ms and L ms. X is 16, Y is 0, Z is 8, and L is 4. When the frame rate of the video service is switched from 60 to 30, the access network device needs to reconfigure the parameter set. After reconfiguration, a DRX cycle and an offset are respectively XX ms and YY ms. XX is 34 and YY is 0. The DRX on duration timer and the DRX inactivity timer included in the second parameter set are respectively Z ms and L ms. That is, values of parameters in the second parameter set remain unchanged.

For example, the parameter in the second parameter set is different from the parameter in the first parameter set. In other words, the parameter in the second parameter set is a parameter other than the first parameter set.

For example, for the DRX mechanism, the second parameter set may include at least one of the following: a DRX on duration timer, a DRX inactivity timer, a DRX short cycle timer, a DRX downlink retransmission timer, a DRX uplink retransmission timer, a DRX downlink hybrid automatic repeat request round trip time timer, a DRX uplink hybrid automatic repeat request round trip time timer, a DRX short cycle (drx short cycle), and a DRX slot offset (drx slot offset).

For example, for the SPS mechanism, the second parameter set may include at least one of the following: a quantity of hybrid automatic repeat request (hybrid automatic repeat request, HARQ) processes (nrofHARQ-Processes) and a physical uplink control channel (physical uplink shared channel, PUCCH) resource. The quantity of HARQ processes indicates a quantity of HARQ processes available for processing a downlink SPS resource, and the PUCCH resource is used by a terminal device to feed back a HARQ result.

For example, for the CG mechanism, the second parameter set may include at least one of the following: a quantity of HARQ processes and a modulation coding scheme (modulation coding scheme, MCS) table (table).

For example, for the SSS mechanism, the second parameter set may include at least one of the following: an aggregation level, a quantity of candidate PDCCHs corresponding to the aggregation level, a time domain length, a to-be-monitored symbol in a slot, and a search space type. For details, refer to related descriptions in the 3rd generation partnership project (3rd generation partnership project, 3GPP) technical specification (technical specification, TS) 38.331.

### 4. Video service

The video service may be an XR video service or another video service. This is not limited herein. In the future, a human interaction manner will change from two-dimensional (two dimensional, 2D) interaction to more efficient three-dimensional (three dimensional, 3D) interaction. As shown in FIG. 2, a 3D visual interaction system depends on the development of virtual reality (virtual reality, VR), augmented reality (augmented reality, AR), and mixed reality (mixed reality, MR), and these technologies are collectively referred to as XR. XR refers to all real and virtual combined environments and related human-machine interaction generated by computer technologies and wearable devices. As shown in FIG. 2, the XR technology is applicable to healthcare (healthcare), education (education), military (military), emergency response (emergency response), industrial and manufacturing (industrial & manufacturing), entertainment (entertainment), engineering (engineering), marketing & advertising (marketing & advertising), retail (retail), and the like.

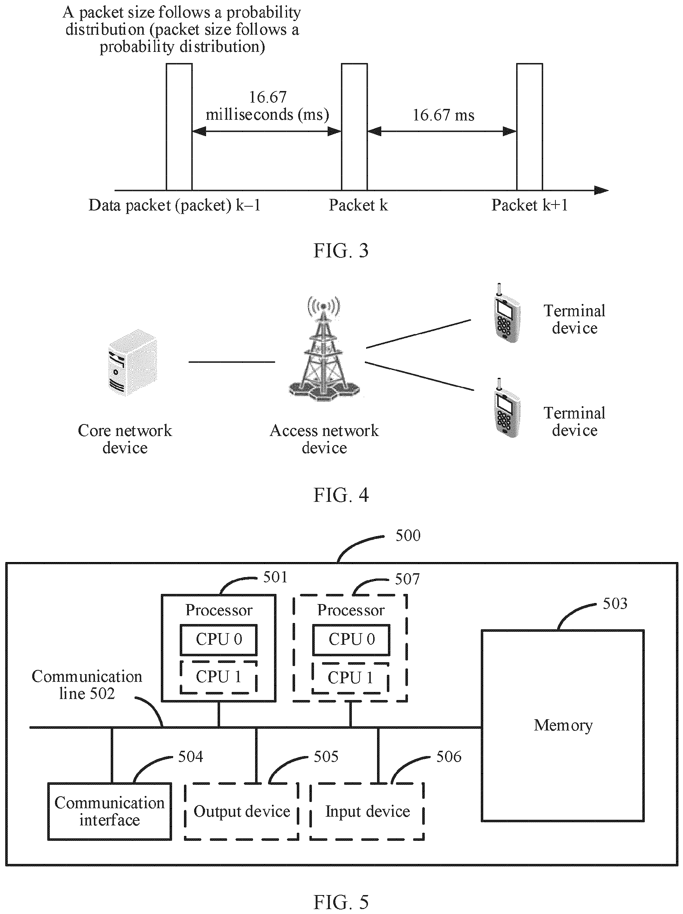

The XR video service is sent periodically, to be specific, video frames of the XR video service are sent periodically. A periodicity of the video frame of the XR video service is a reciprocal of a frame rate, and the frame rate is a quantity of frames included in the XR video service per second. Generally, the minimum frame rate is 24 fps. When the frame rate is lower than 24 fps, human eyes can feel obvious freezing. For a video with slow image change, 30 fps is sufficient. For a video with sharp image change, 60 fps is usually required. As shown in FIG. 3, a frame rate of 60 fps is used as an example, a periodicity of the video frame is 1/60=16.67 ms. To be specific, a data packet (packet) is a video frame of the XR video service, and a periodicity of any data packet is 16.67 ms. For example, periodicities of a data packet k-1 to a data packet k+1 each are all 16.67 ms. If a time length of a video of 60 fps is the same as that of a video of 30 fps, a quantity of images of the video of 60 fps is twice that of the video of 30 fps. Therefore, a size of the video of 60 fps is about twice that of the video of 30 fps. Therefore, the frame rate is in direct proportion to the video size. A higher frame rate indicates smoother video playback. In the XR video service, common settings of the frame rate are 30 fps, 60 fps, 90 fps, and 120 fps. When the frame rate of the XR video service is 30 fps, the periodicity of the video frame is 33.33 ms. When the frame rate of the XR video service is 60 fps, the periodicity of the video frame is 16.67 ms. When the frame rate of the XR video service is 90 fps, the periodicity of the video frame is 11.11 ms. When the frame rate of the XR video service is 120 fps, the periodicity of the video frame is 8.33 ms.

XR video services are extremely sensitive to a rate and a delay of the data packet, to meet users' requirements for ultimate smooth experience. For a VR video service/an AR video service, a data packet delay budget (packet delay budget, PDB) is 10 ms. The PDB is defined as a time threshold from a moment when a data packet or a video frame arrives at an access network device to a moment when the data packet or the video frame is successfully received by a terminal device. In addition, for example, if the frame rate is 60 fps, a data rate at an application layer can reach 45 megabits per second (megabits per second, Mbps), and an average packet size of each video frame is 750 kilobits (kbit).

It should be understood that the technical solutions in embodiments of this application are applicable to a long term evolution (long term evolution, LTE) architecture, a fifth generation mobile communication technology (5th generation mobile network, 5G), a wireless local area network (wireless local area network, WLAN) system, a V2X communication system, and the like. The technical solutions in embodiments of this application are further applicable to another future communication system, for example, a 6G communication system. In the future communication system, a same function may be maintained, but a name may be changed.

The following describes a basic architecture of a communication system provided in embodiments of this application. FIG. 4 shows a basic architecture of a communication system according to an embodiment of this application. As shown in FIG. 4, the communication system includes an access network device and at least one terminal device (two terminal devices are shown in FIG. 4) that communicates with the access network device. The access network device may also be referred to as a radio access network device. The terminal device may be connected to the radio access network device in a wireless manner. The terminal device may be at a fixed location, or may be mobile.

The access network device is a network-side entity that is configured to send a signal, receive a signal, or send a signal and receive a signal. The access network device may be an apparatus that is deployed in a radio access network (radio access network, RAN) and that provides a wireless communication function for the terminal device, for example, may be a transmission reception point (transmission reception point, TRP), a base station, or control nodes in various forms, for example, a network controller, a radio controller, or a radio controller in a cloud radio access network (cloud radio access network, CRAN) scenario. Specifically, the access network device may be a macro base station, a micro base station (also referred to as a small station), a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission point (transmitting and receiving point, TRP), a transmitting point (transmitting point, TP), a mobile switching center, a satellite, an unmanned aerial vehicle, or the like in various forms, or may be an antenna panel of a base station. The control node may be connected to a plurality of base stations, and configure resources for a plurality of terminals covered by the plurality of base stations. In systems using different radio access technologies, names of devices with the base station function may be different. For example, the access network device may be a NodeB, an eNodeB, a gNB in 5G, a network side device in a network after 5G, an access network device in a future evolved PLMN network, or a device that provides a base station function in device-to-device (Device-to-Device, D2D) communication, machine-to-machine (Machine-to-Machine, M2M) communication, or internet of vehicles communication. A specific name of the access network device is not limited in this application. In addition, the access network device may further include a distributed unit (distributed unit, DU) and a central unit (central unit, CU).

The terminal device is a user-side entity that is configured to receive a signal, send a signal, or receive a signal and send a signal. The terminal device is configured to provide one or more of a voice service and a data connectivity service for a user. The terminal device may be a device that includes a wireless transceiver function and that can cooperate with the access network device to provide a communication service for the user. Specifically, the terminal device may be user equipment (user equipment, UE), an access terminal, a subscriber unit, a subscriber station, a mobile station, a remote station, a remote terminal, a mobile device, a terminal, a wireless communication device, a user agent, or a user apparatus. The terminal device may alternatively be an uncrewed aerial vehicle, an internet of things (internet of things, IoT) device, a station (station, ST) in a WLAN, a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, a vehicle-mounted device, a wearable device (also referred to as a wearable intelligent device), a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. The terminal device may alternatively be a device-to-device (device to device, D2D) device, for example, an electricity meter or a water meter. Alternatively, the terminal device may be a terminal in a 5G system, or a terminal in a next-generation communication system. This is not limited in embodiments of this application.

The access network device and the terminal device may be deployed on land, and include an indoor or outdoor device, a handheld device, or a vehicle-mounted device; or may be deployed on water; or may be deployed on a plane, a balloon, and a satellite in air. Application scenarios of the access network device and the terminal device are not limited in embodiments of this application.

Embodiments of this application are applicable to downlink signal transmission, are applicable to uplink signal transmission, and are further applicable to device-to-device (Device To Device, D2D) signal transmission. For the downlink signal transmission, a sending device is an access network device, and correspondingly, a receiving device is a terminal device. For the uplink signal transmission, a sending device is a terminal device, and correspondingly, a receiving device is an access network device. For the D2D signal transmission, a sending device is a terminal device, and correspondingly, a receiving device is also a terminal device. A signal transmission direction is not limited in embodiments of this application.

Communication between the access network device and the terminal device and communication between the terminal devices may be performed by using a licensed spectrum, an unlicensed spectrum, or both a licensed spectrum and an unlicensed spectrum. A spectrum below 6 G, a spectrum above 6 G, or both a spectrum below 6 G and a spectrum above 6 G may be used for communication between the radio access network device and the terminal device and communication between the terminal devices. Spectrum resources used between the access network device and the terminal device are not limited in embodiments of this application.

In addition, the communication system may further include a core network device, and the access network device is connected to the core network device in a wireless or wired manner. The core network device and the access network device may be different physical devices that are independent of each other, or functions of the core network device and logical functions of the access network device may be integrated into a same physical device, or some functions of the core network device and some functions of the access network device may be integrated into one physical device. The communication system may further include other network devices, for example, a wireless relay device and a wireless backhaul device (not shown in FIG. 4). Quantities of terminal devices, access network devices, and core network devices are not limited in embodiments of this application.

For example, each device (for example, the access network device, the terminal device, or the core network device) in FIG. 4 may be implemented by one device, may be jointly implemented by a plurality of devices, or may be a functional module in a device. This is not specifically limited in embodiments of this application. It may be understood that the foregoing function may be a network element in a hardware device, a software function running on dedicated hardware, or a virtualization function instantiated on a platform (for example, a cloud platform).

For example, each device in FIG. 4 may be implemented by a communication apparatus 500 in FIG. 5. FIG. 5 is a schematic of a hardware structure of a communication apparatus applicable to an embodiment of this application. The communication apparatus 500 includes at least one processor 501, a communication line 502, a memory 503, and at least one communication interface 504.

The processor 501 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 502 may include a path for information transmission between the foregoing components.

The communication interface 504 is any apparatus (such as an antenna) of a transceiver type, and is configured to communicate with another device or a communication network, such as the Ethernet, a RAN, or a wireless local area network (wireless local area network, WLAN).

The memory 503 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Bluray disc, or the like), a magnetic disk storage medium, another magnetic storage device, or any other medium that can carry or store expected program code in a form of an instruction or a data structure and that can be accessed by a computer, but is not limited thereto. The memory may exist independently, and is connected to the processor through the communication line 502. The memory may alternatively be integrated with the processor. The memory provided in embodiments of this application may be usually non-volatile.

The memory 503 is configured to store computer-executable instructions for performing the solutions of this application, and the processor 501 controls execution. The processor 501 is configured to execute the computer-executable instructions stored in the memory 503, to implement a method provided in the following embodiments of this application.

For example, the computer-executable instructions in embodiments of this application may also be referred to as application program code. This is not specifically limited in embodiments of this application.

In a possible implementation, the processor 501 may include one or more CPUs, for example, a CPU 0 and a CPU 1 in FIG. 5.

In a possible implementation, the communication apparatus 500 may include a plurality of processors, for example, the processor 501 and a processor 507 in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

In a possible implementation, the communication apparatus 500 may further include an output device 505 and an input device 506. The output device 505 communicates with the processor 501, and may display information in a plurality of manners. For example, the output device 505 may be a liquid crystal display (liquid crystal display, LCD), a light emitting diode (light emitting diode, LED) display device, a cathode ray tube (cathode ray tube, CRT) display device, or a projector (projector). The input device 506 communicates with the processor 501, and may receive user input in a plurality of manners. For example, the input device 506 may be a mouse, a keyboard, a touchscreen device, a sensor device, or the like.

The communication apparatus 500 may be a general-purpose device or a dedicated device. In specific implementation, the communication apparatus 500 may be a desktop computer, a portable computer, a network server, a palmtop computer (personal digital assistant, PDA), a mobile phone, a tablet computer, a wireless terminal device, an embedded device, or a device having a structure similar to that in FIG. 5. A type of the communication apparatus 500 is not limited in embodiments of this application.

For ease of understanding this application, the following describes related technical knowledge in embodiments of this application herein.

In a possible implementation, a DRX parameter may be configured by using DRX-Config (for details, refer to the following information element (information element, IE)) in RRC signaling. The DRX parameter may include, for example, the value ranges of the timers in Table 1, a DRX long cycle start offset, a DRX short cycle, and a DRX slot offset. The DRX long cycle start offset may indicate a start offset and a long DRX cycle (long DRX Cycle).

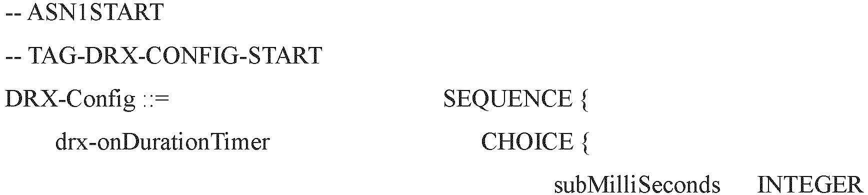

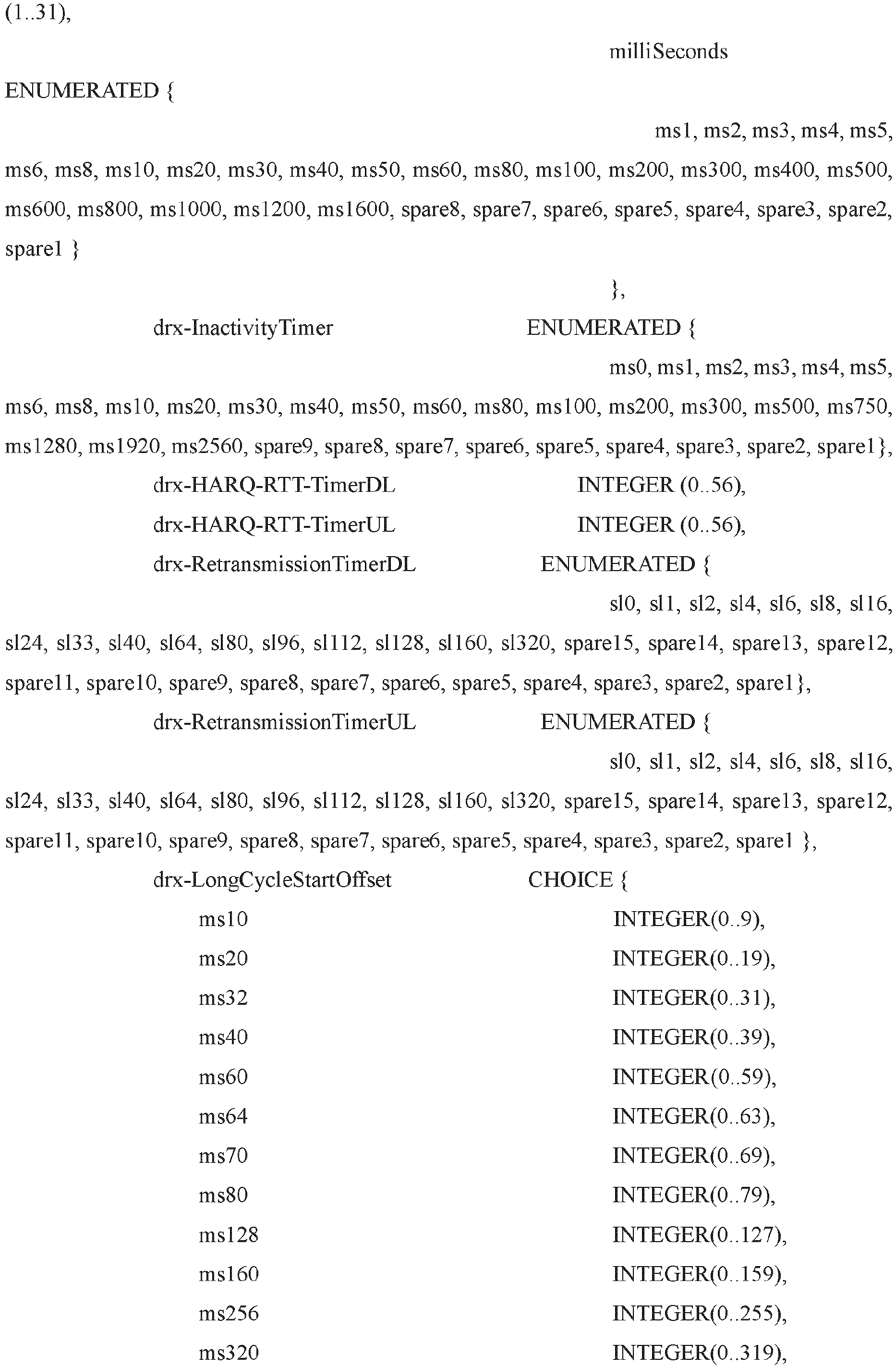

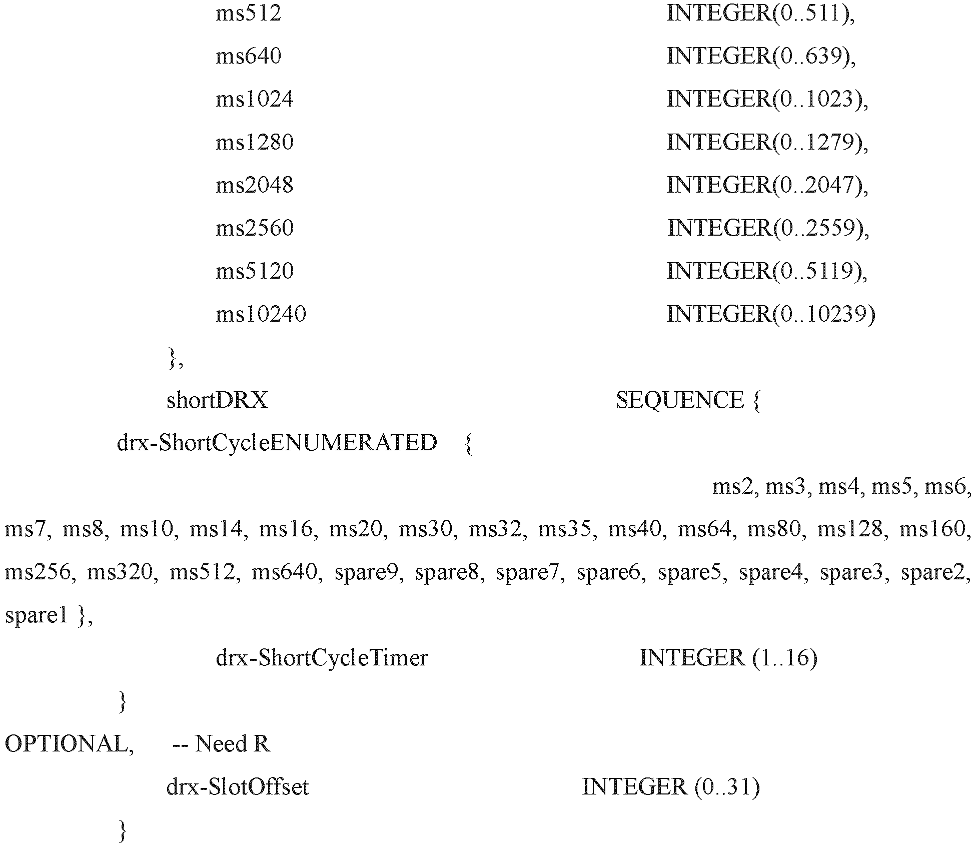

In another possible implementation, a DRX parameter may be configured by using DRX-ConfigSecondaryGroup (for details, refer to the following information element) in RRC signaling. The DRX parameter may include, for example, the value ranges of the DRX on duration timer and the DRX inactivity timer in Table 1.

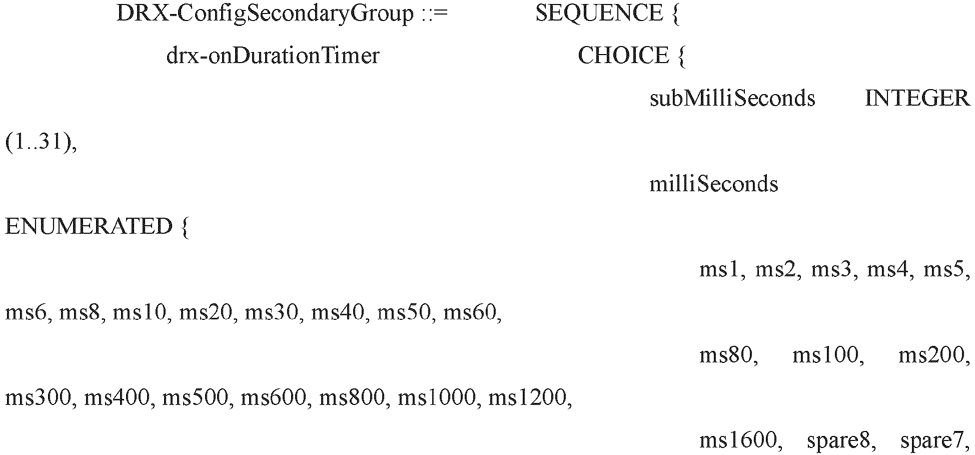

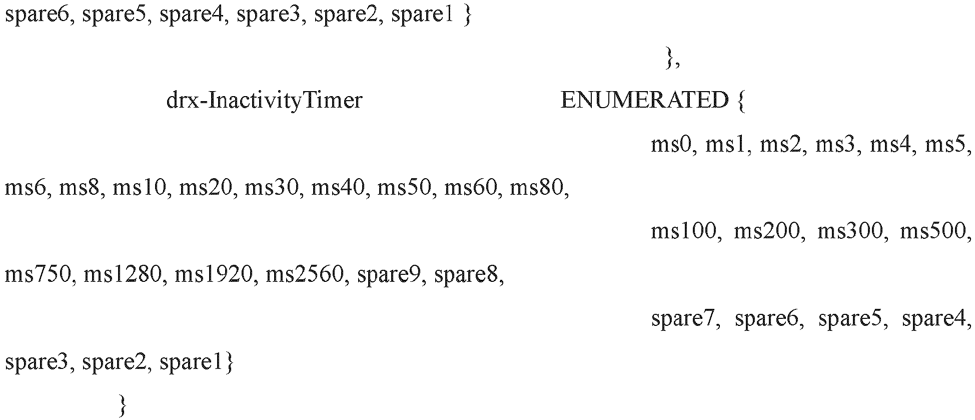

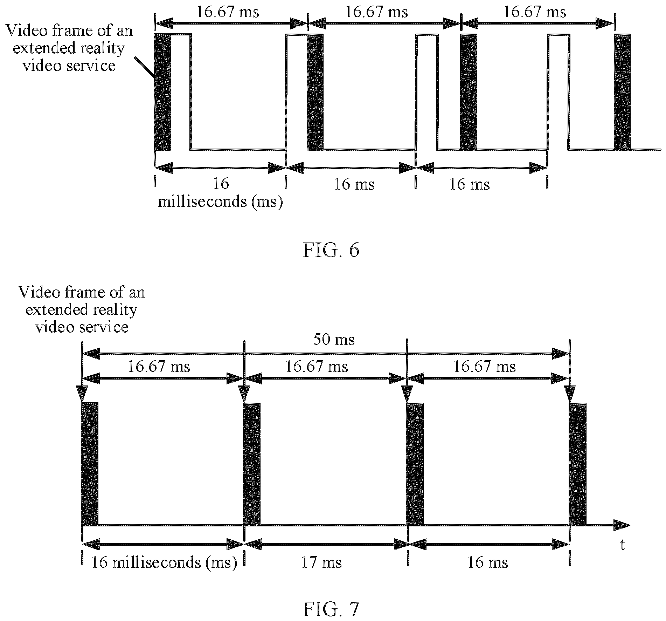

In an existing solution, before a terminal enables a DRX mechanism, a C-DRX parameter is configured by an access network device by using RRC signaling, and the access network device sets a DRX cycle with consideration of network load, a service status of the terminal device, and the like. The DRX cycle may not completely match a service periodicity. For example, a service of the terminal device is an XR video service. An existing DRX configuration has the following problem: A periodicity of a video frame of the XR video service is a non-integer, but a DRX cycle is an integer. Periodicities of video frames corresponding to different frame rates of 30 fps, 60 fps, 90 fps, and 120 fps are respectively 33.33 ms, 16.67 ms, 11.11 ms, and 8.33 ms. A short DRX cycle may be set to 2 ms, 3 ms, 4 ms, 5 ms, 6 ms, 7 ms, 8 ms, 10 ms, 14 ms, 16 ms, 20 ms, 30 ms, 32 ms, 35 ms, 40 ms, 64 ms, 80 ms, 128 ms, 160 ms, 256 ms, 320 ms, 512 ms, or 640 ms. A long DRX cycle may be set to being an integer multiple of the short DRX cycle. In each DRX cycle, the DRX on duration timer may be set to 1/32 ms, 2/32 ms, ..., 31/32 ms, 1 ms, 2 ms, 3 ms, 4 ms, 5 ms, 6 ms, 8 ms, 10 ms, 20 ms, 30 ms, 40 ms, 50 ms, 60 ms, 80 ms, 100 ms, 200 ms, 300 ms, 400 ms, 500 ms, 600 ms, 800 ms, 1000 ms, 1200 ms, or 1600 ms. This causes a problem that the DRX cycle cannot completely match the periodicity of the video frame. At a moment at which the video frame arrives, the terminal device may be in a sleep period of the DRX cycle, and cannot detect a PDCCH and transmit data in time, resulting in a delay of the video frame. In addition, if a data packet arrives long after the DRX on duration timer is started, the terminal device is in an invalid on state for a long time period, and energy of the terminal device is wasted. As shown in FIG. 6, 60 fps is used as an example. A DRX cycle is 16 ms, a periodicity of a video frame of an XR video service is 16.67 ms, and the DRX cycle does not match the periodicity of the video frame, in other words, the DRX cycle does not match the non-integer periodicity of the video frame.

To resolve a problem that the DRX cycle does not match the non-integer periodicity of the video frame, an existing solution is that an access network device configures different DRX modes for a terminal device based on video frames with different frame rates. One DRX mode has different DRX cycles. A periodicity of an XR video service is a non-integer periodicity, and a DRX cycle allowed in an existing protocol is an integer. An initial purpose of introducing the DRX mode is to match the DRX cycle with the periodicity of the XR video service. The periodicity of the video frame may be known by obtaining a frame rate of the video frame of the XR video service. If a sum of non-integer periodicities of several video frames may be an integer, in other words, after several video frames, matching between the periodicity of the video frame and the DRX cycle may be implemented. For example, with reference to FIG. 7, it can be learned that, for video frames of an XR video service of 60 fps, a periodicity of the first video frame is 16.67 ms, in other words, a relative start moment of a periodicity of the second video frame is 16.67 ms, and the first DRX cycle is 16 ms, in other words, a relative start moment of the second DRX cycle is 16 ms, and the relative start moment of the periodicity of the second video frame does not match the relative start moment of the second DRX cycle. A periodicity of the second video frame is 16.67 ms, in other words, a relative start moment of a periodicity of the third video frame is 33.34 ms, and the second DRX cycle is 17 ms, in other words, a relative start moment of the third DRX cycle is 33 ms, and the relative start moment of the periodicity of the third video frame does not match the relative start moment of the third DRX cycle. A periodicity of the third video frame is 16.67 ms, in other words, a relative start moment of a periodicity of the fourth video frame is 50 ms, and the third DRX cycle is 17 ms, in other words, a relative start moment of the fourth DRX cycle is 50 ms, and the relative start moment of a periodicity of the fourth video frame matches the relative start moment of the fourth DRX cycle.

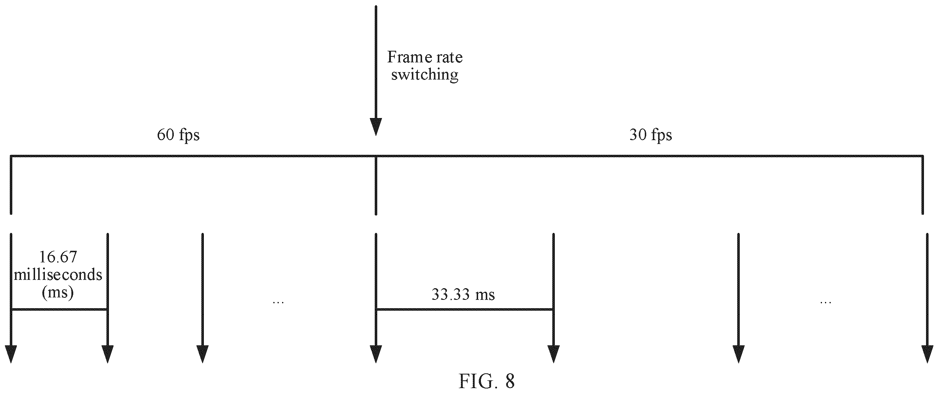

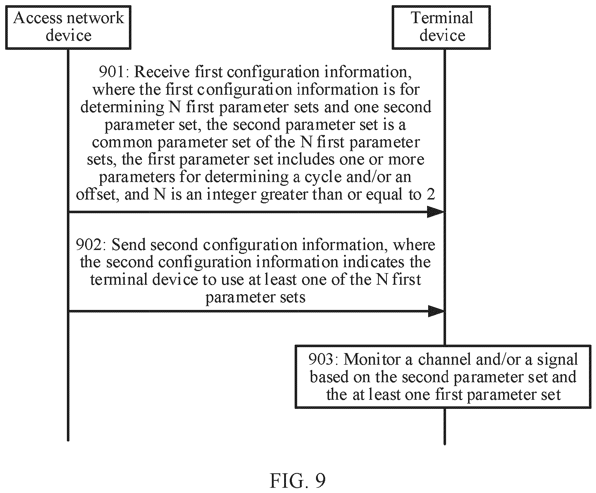

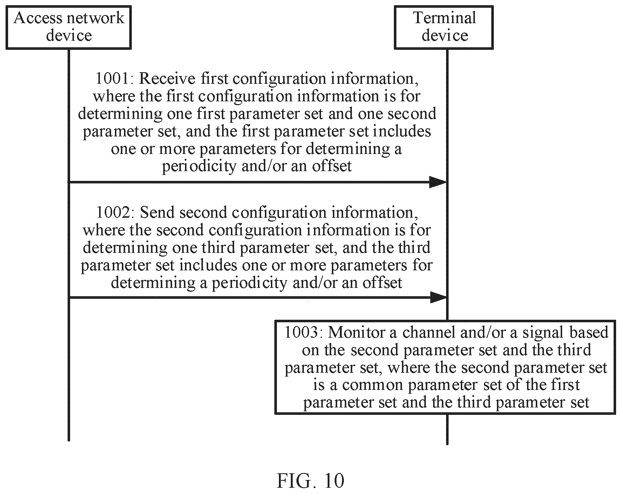

However, the video frame of the XR video service may not always remain unchanged, and frame rate switching may occur. For example, when an uplink buffer is empty, if a video frame is to be obtained, the video frame needs to be rendered based on a jitter condition. This causes frame rate switching. For another example, in another scenario, when network congestion occurs, a data volume may be reduced in a manner of reducing a frame rate. In this case, the frame rate change is fixed. For example, a frame rate of a video frame is reduced from 60 fps to 30 fps. As shown in FIG. 8, in the first time period, a frame rate of an XR video frame is 60 fps, and in the second time period, the frame rate of the XR video frame is 30 fps. It should be understood that the frame rate of the video frame changes, and as a result, the access network device needs to reconfigure DRX configuration information. However, when the DRX configuration information is reconfigured, all parameters in the DRX configuration information are usually reconfigured. Consequently, the access network device repeatedly configures some parameters. This causes an extra delay. To resolve the technical problem, refer to FIG. 9 or FIG. 10.

It should be understood that the following embodiments are not only applicable to the DRX mechanism, but also applicable to other mechanisms in this application.

FIG. 9 is a schematic flowchart of a communication method according to an embodiment of this application. The method includes but is not limited to the following steps:
901: A terminal device receives first configuration information, where the first configuration information is for determining N first parameter sets and one second parameter set, the second parameter set is a common parameter set of the N first parameter sets, the first parameter set includes one or more parameters for determining a cycle and/or an offset, and N is an integer greater than or equal to 2.

Correspondingly, an access network device sends the first configuration information.

In this application, receiving may be understood as direct receiving or relay receiving, and correspondingly, sending may be understood as direct sending or relay sending. For example, in a possible implementation, in a case of direct receiving, step 901 may be understood as: The terminal device receives the first configuration information from the access network device, and correspondingly, the access network device sends the first configuration information to the terminal device. In another possible implementation, in a case of relay receiving, step 901 may be understood as: The terminal device receives the first configuration information from the access network device via a relay device, and correspondingly, the access network device sends the first configuration information to the terminal device via the relay device. The relay device may be, for example, a relay base station, for example, a micro base station. Alternatively, the relay device may be a relay terminal, for example, an idle terminal. Alternatively, the relay device may be a relay transmission reception point (TRP), for example, a network entity such as customer premise equipment (customer premise equipment, CPE), a relay transceiver, or a relay agent.

For the first parameter set and the second parameter set, refer to the foregoing related descriptions. Details are not described herein again. For example, in this application, "common" may be understood as "shared".

For example, all parameters in one first parameter set in the N first parameter sets and one second parameter set may be included in one parameter group, and N-1 first parameter sets are respectively included in N-1 parameter groups. In other words, one parameter group in the N parameter groups may include all parameters in one first parameter set in the N first parameter sets and one second parameter set, and any one of the N-1 parameter groups includes all parameters in one first parameter set.

For example, the N first parameter sets include a first parameter set #1, a first parameter set #2, and a first parameter set #3, a first parameter group includes all parameters in the first parameter set #1 and one second parameter set, a second parameter group includes all parameters in the first parameter set #2, and a third parameter group includes all parameters in the first parameter set #3. In other words, descriptions for the first parameter group in an existing protocol may still be used. For example, the first parameter group includes all parameters in DRX-Config, or the first parameter group includes all parameters in DRX-ConfigSecondaryGroup and a DRX long cycle start offset.

For example, the first configuration information is configured by using RRC signaling. That the first configuration information is configured by using RRC signaling may be understood as that the first configuration information is carried in the RRC signaling.

For example, the method further includes: The access network device receives a frame rate of a video service supported by the terminal device and/or a frame rate of a video service supported by a core network device; and correspondingly, the terminal device sends the frame rate of the video service supported by the terminal device; and/or the core network device sends the frame rate of the video service supported by the core network device. It should be understood that when receiving the frame rate of the video service supported by the terminal device and/or the frame rate of the video service supported by the core network device, the access network device may send the first configuration information based on the frame rate of the video service supported by the terminal device and/or the frame rate of the video service supported by the core network device.

For example, the frame rate of the video service supported by the terminal device may be carried in uplink control information (uplink control information, UCI), for example, a packet header of the UCI. Alternatively, when uplink data is transmitted, the frame rate of the video service supported by the terminal device is carried in the first data packet. Alternatively, when uplink data is transmitted, the frame rate of the video service supported by the terminal device is carried in any data packet.

The frame rate of the video service supported by the terminal device may be, for example, a maximum or minimum frame rate of the video service supported by the terminal device, and the frame rate of the video service supported by the core network device may be, for example, a maximum or minimum frame rate of the video service supported by the core network device.

The access network device may receive the frame rate of the video service supported by the terminal device and/or the frame rate of the video service supported by the core network device before step 901.

It can be learned that, in the foregoing technical solution, because the terminal device reports the frame rate of the supported video service and/or the core network device reports the frame rate of the supported video service, the access network device can configure a plurality of first parameter sets for the terminal device in advance with reference to the frame rate of the video service supported by the terminal device and/or the frame rate of the video service supported by the core network device, so that the plurality of configured first parameter sets can meet a requirement of the terminal device and/or a requirement of the core network device. In addition, this avoids an increase in a data processing error rate caused because the plurality of configured first parameter sets are out of a capability range of the terminal device.

902: The access network device sends second configuration information, where the second configuration information indicates the terminal device to use at least one of the N first parameter sets.

Correspondingly, the terminal device receives the second configuration information.

For example, step 902 may be understood as that the access network device may send the second configuration information based on the frame rate of the video service. For example, when detecting that the frame rate of the video service changes, the access network device sends the second configuration information.

For example, the second configuration information is configured by using downlink control information (downlink control information, DCI) signaling or a media access control (media access control, MAC) control element (control element, CE). In other words, the second configuration information is carried in the DCI signaling or the MAC CE. It can be learned that, the second configuration information is sent by using the DCI signaling or the MAC CE, so that a delay is reduced and a network capacity is increased. In addition, overheads are reduced.

903: The terminal device monitors a channel and/or a signal based on the second parameter set and the at least one first parameter set.

For example, step 903 may be understood as that the terminal device monitors a channel and/or a signal in an active period based on the second parameter set and the at least one first parameter set, to obtain the video service.

It can be learned that, in the foregoing technical solution, the first configuration information may be for determining N first parameter sets and one second parameter set, and the first parameter set includes one or more parameters for determining a periodicity and/or an offset. In other words, the access network device may deliver the first parameter set in advance during initial configuration. When the frame rate of the video service changes, the access network device does not need to reconfigure all parameters, but delivers the second configuration information indicating the terminal device to use at least one of the N first parameter sets. This reduces a delay, meets a delay requirement of the video service, avoids a problem that a delay of video service transmission exceeds a delay threshold, improves the network capacity, avoids repeated configuration of a same parameter, and reduces signaling overheads. In addition, the terminal device may monitor a channel and/or a signal based on the second parameter set and the at least one first parameter set. Therefore, a packet loss problem is avoided.

FIG. 10 is a schematic flowchart of another communication method according to an embodiment of this application. The method includes but is not limited to the following steps:

1001: A terminal device receives first configuration information, where the first configuration information is for determining one first parameter set and one second parameter set, and the first parameter set includes one or more parameters for determining a periodicity and/or an offset.

Correspondingly, an access network device sends the first configuration information.

For example, for a DRX mechanism, all parameters in one first parameter set and one second parameter set may be understood as all parameters in DRX-Config; or all parameters in one first parameter set and one second parameter set may be understood as all parameters in DRX-ConfigSecondaryGroup and a DRX long cycle start offset.

For another example, for an SPS mechanism, all parameters in one first parameter set and one second parameter set may be understood as all parameters in SPS-config.

For the first parameter set and the second parameter set, refer to the foregoing related descriptions. Details are not described herein again.

For example, the first configuration information is configured by using RRC signaling. That the first configuration information is configured by using RRC signaling may be understood as that the first configuration information is carried in the RRC signaling.

1002: The access network device sends second configuration information, where the second configuration information is for determining one third parameter set, and the third parameter set includes one or more parameters for determining a periodicity and/or an offset.

Correspondingly, the terminal device receives the second configuration information.

For example, for the DRX mechanism, the third parameter set includes a parameter for determining a DRX cycle, and/or the first parameter set includes another parameter for determining an offset. For the SPS mechanism and a CG mechanism, the third parameter set includes a parameter for determining a periodicity. For an SSS mechanism, PDCCH monitoring, or the like, the third parameter set includes a parameter for determining a monitoring periodicity, and/or the first parameter set includes another parameter for determining an offset. It should be understood that a periodicity in the third parameter set is different from a periodicity in the first parameter set, and/or an offset in the third parameter set is different from an offset in the first parameter set. In a possible implementation, that a periodicity in the third parameter set is different from a periodicity in the first parameter set may be understood as that a length of the periodicity in the third parameter set is different from a length of the periodicity in the first parameter set. In another possible implementation, for the DRX mechanism, that a periodicity in the third parameter set is different from a periodicity in the first parameter set may be understood as that a long DRX cycle indicated by a DRX long cycle offset in the third parameter set is different from a long DRX cycle indicated by a DRX long cycle offset in the first parameter set.

For example, a frame rate corresponding to the first parameter set is different from a frame rate corresponding to the third parameter set. For example, the frame rate corresponding to the first parameter set is greater than or less than the frame rate corresponding to the third parameter set.

In a possible implementation, step 1002 may be understood as that the access network device may send the second configuration information based on a frame rate of a video service. For example, when detecting that the frame rate of the video service changes, the access network device sends the second configuration information.

For example, the second configuration information is configured by using DCI signaling or a MAC CE. In other words, the second configuration information is carried in the DCI signaling or the MAC CE. It can be learned that, the second configuration information is sent by using the DCI signaling or the MAC CE, so that a delay is reduced and a network capacity is increased. In addition, overheads are reduced.

1003: The terminal device monitors a channel and/or a signal based on the second parameter set and the third parameter set, where the second parameter set is a common parameter set of the first parameter set and the third parameter set.

For example, step 1003 may be understood as that the terminal device monitors a channel and/or a signal in an active period based on the second parameter set and the third parameter set, to obtain the video service.

It can be learned that, in the foregoing technical solution, the first configuration information is for determining one first parameter set and one second parameter set, and the first parameter set includes one or more parameters for determining a periodicity and/or an offset. In other words, the access network device configures one first parameter set and one second parameter set during initial configuration. When the frame rate of the video service changes, the access network device sends the second configuration information for determining one third parameter set, where the third parameter set includes one or more parameters for determining a periodicity and/or an offset. That is, the access network device configures only a parameter that needs to be updated. This avoids repeated parameter configuration, in other words, avoids repeated configuration of a same parameter, reduces signaling overheads and reduces a delay, meets a delay requirement of the video service, avoids a problem that a delay of video service transmission exceeds a delay threshold, and improves the network capacity. In addition, the terminal device may monitor a channel and/or a signal based on the second parameter set and the third parameter set. Therefore, a packet loss problem is avoided.

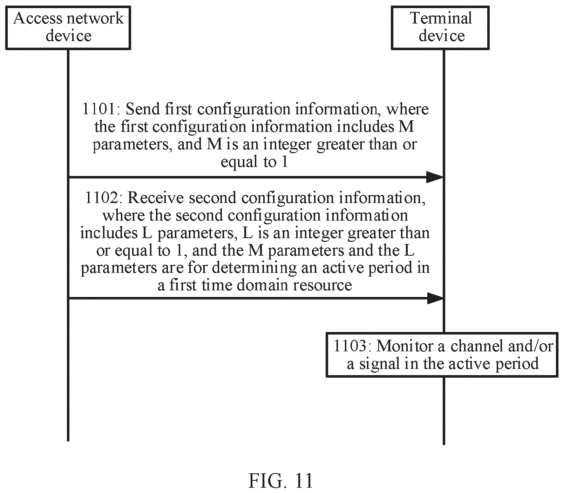

Currently, the access network device may send configuration information, for example, all parameters in DRX-ConfigSecondaryGroup, to the terminal device, so that the terminal device determines an active period. However, in this manner, determining of the active period at a same moment is determined only by all the parameters in DRX-ConfigSecondaryGroup. This may cause a problem that matching between an XR video service and a DRX technology is poor. To resolve this problem, refer to FIG. 11. FIG. 11 is a schematic flowchart of still another communication method according to an embodiment of this application. The method includes but is not limited to the following steps:

1101: An access network device sends first configuration information, where the first configuration information includes M parameters, and M is an integer greater than or equal to 1.

Correspondingly, a terminal device receives the first configuration information.

For example, for a DRX mechanism, the M parameters include a parameter for determining a DRX cycle, and/or a first parameter set includes another parameter for determining an offset. For an SPS mechanism and a CG mechanism, the M parameters include a parameter for determining a periodicity. For an SSS mechanism, PDCCH monitoring, or the like, the M parameters include a parameter for determining a monitoring periodicity, and/or the first parameter set includes another parameter for determining an offset.

In addition, for the DRX mechanism, the M parameters may further include at least one of the following: a DRX on duration timer, a DRX inactivity timer, a DRX short cycle timer, a DRX downlink retransmission timer, a DRX uplink retransmission timer, a DRX downlink hybrid automatic repeat request round trip time timer, a DRX uplink hybrid automatic repeat request round trip time timer, a DRX short cycle, and a DRX slot offset. For the SPS mechanism, the M parameters may further include at least one of the following: a quantity of HARQ processes and a PUCCH resource. For the CG mechanism, the M parameters may further include at least one of the following: a quantity of HARQ processes and an MCS table. For the SSS mechanism, the M parameters may further include at least one of the following: an aggregation level, a quantity of candidate PDCCHs corresponding to the aggregation level, a time domain length, a to-be-monitored symbol in a slot, and a search space type.

For example, the M parameters may be included in a first parameter group.

For example, the first configuration information is configured by using RRC signaling. That the first configuration information is configured by using RRC signaling may be understood as that the first configuration information is carried in the RRC signaling.

1102: The terminal device receives second configuration information, where the second configuration information includes L parameters, L is an integer greater than or equal to 1, and the M parameters and the L parameters are for determining an active period in a first time domain resource.

Correspondingly, the access network device sends the second configuration information.

For example, for the DRX mechanism, the L parameters include a parameter for determining the DRX cycle, and/or the first parameter set includes another parameter for determining an offset. For the SPS mechanism and the CG mechanism, the L parameters include a parameter for determining a periodicity. For the SSS mechanism, PDCCH monitoring, or the like, the L parameters include a parameter for determining a monitoring periodicity, and/or the first parameter set includes another parameter for determining an offset.

In addition, for the DRX mechanism, the L parameters may further include at least one of the following: a DRX on duration timer, a DRX inactivity timer, a DRX short cycle timer, a DRX downlink retransmission timer, a DRX uplink retransmission timer, a DRX downlink hybrid automatic repeat request round trip time timer, a DRX uplink hybrid automatic repeat request round trip time timer, a DRX short cycle, and a DRX slot offset. For the SPS mechanism, the L parameters may further include at least one of the following: a quantity of HARQ processes and a PUCCH resource. For the CG mechanism, the L parameters may further include at least one of the following: a quantity of HARQ processes and an MCS table. For the SSS mechanism, the L parameters may further include at least one of the following: an aggregation level, a quantity of candidate PDCCHs corresponding to the aggregation level, a time domain length, a to-be-monitored symbol in a slot, and a search space type.

For example, the L parameters may be included in a second parameter group.

For example, that the M parameters and the L parameters are for determining an active period in a first time domain resource may be understood as that the M parameters and the L parameters are used by the terminal device in the first time domain resource, to determine the active period. In this application, the first time domain resource may be understood as a frame, a subframe, a slot, a mini-slot, a symbol, or the like. This is not limited herein.

For example, in this application, the M parameters and the L parameters are further for determining a sleep period in the first time domain resource.

For example, parameters included in the first parameter group are completely different from parameters included in the second parameter group, or parameters included in the first parameter group are partially different from parameters included in the second parameter group. That parameters included in the first parameter group are completely different from parameters included in the second parameter group, or parameters included in the first parameter group are partially different from parameters included in the second parameter group may be understood in any one or more of the following manners. Details are not described herein.

Manner 1: A periodicity included in the first parameter group is the same as a periodicity included in the second parameter group, or a periodicity included in the first parameter group is different from a periodicity included in the second parameter group; and/or an offset included in the first parameter group is different from an offset included in the second parameter group. In a possible implementation, that a periodicity included in the first parameter group is the same as a periodicity included in the second parameter group may be understood as that a length of the periodicity included in the first parameter group is the same as a length of the periodicity included in the second parameter group. Similarly, that a periodicity included in the first parameter group is different from a periodicity included in the second parameter group may be understood as that a length of the periodicity included in the first parameter group is different from a length of the periodicity included in the second parameter group. In another possible implementation, for the DRX mechanism, that a periodicity included in the first parameter group is the same as a periodicity included in the second parameter group may be understood as that a long DRX cycle indicated by a DRX long cycle start offset in the first parameter group is the same as a long DRX cycle indicated by a DRX long cycle start offset in the second parameter group. Similarly, that a periodicity included in the first parameter group is different from a periodicity included in the second parameter group may be understood as that a long DRX cycle indicated by a DRX long cycle start offset in the first parameter group is different from a long DRX cycle indicated by a DRX long cycle start offset in the second parameter group.

Manner 2: There is an association relationship between a parameter other than the periodicity and/or the offset in the first parameter group and a parameter other than the periodicity and/or the offset in the second parameter group. For the parameter other than the periodicity and/or the offset in the first parameter group and the parameter other than the periodicity and/or the offset in the second parameter group, parameters included in different parameter groups may be partially the same or completely different. Values of same parameters included in different parameter groups may be completely the same, partially the same, or completely different. When the values of the same parameters included in different parameter groups are partially the same or completely different, a value of the parameter in any parameter group may be used. It is clear that, a specific parameter group in which a value of the parameter is to be used may be indicated by a network device to the terminal device through signaling (such as RRC signaling, DCI, or a MAC CE), or may be predefined, or may be determined by the terminal device. In consideration of a signaling transmission delay, the DCI is preferentially selected. If a parameter group in which the parameter is to be used is predefined, there are a plurality of predefined rules. For example, the predefined rule is to use a maximum value or a minimum value of same parameters in a plurality of parameter groups, or the predefined rule is to use a parameter in a fixed parameter group, for example, a parameter group whose group identifier (ID) is a fixed value. In addition, at a same moment, a union set of parameters included in different parameter groups may be obtained. It can be learned that, in this manner, there may be a plurality of combinations of parameter configurations, and flexibility is higher.

For example, DRX-related parameters are grouped into different DRX parameter groups. For example, all parameters in DRX-Config are grouped into different DRX parameter groups, or all parameters in DRX-Config and DRX-ConfigSecondaryGroup are grouped into different DRX parameter groups. In addition, other DRX-related parameters may be added in subsequent protocol versions, and other DRX-related parameters may be added and allocated to a same DRX parameter group or different DRX parameter groups. For example, the parameters in DRX-Config include: a DRX on duration timer, a DRX inactivity timer, a DRX downlink retransmission timer, a DRX uplink retransmission timer, a DRX downlink hybrid automatic repeat request round trip time timer, a DRX uplink hybrid automatic repeat request round trip time timer, a DRX short cycle, a DRX slot offset, and a DRX long cycle start offset. All the parameters in DRX-Config are grouped into three groups: a DRX parameter group #1, a DRX parameter group #2, and a DRX parameter group #3.

In a possible implementation, the DRX parameter group #1 includes the DRX on duration timer, the DRX inactivity timer, and the DRX long cycle start offset; the DRX parameter group #2 includes the DRX downlink retransmission timer, the DRX uplink retransmission timer, the DRX downlink hybrid automatic repeat request round trip time timer, the DRX uplink hybrid automatic repeat request round trip time timer, and the DRX long cycle start offset; and the DRX parameter group #3 includes the DRX short cycle, the DRX slot offset, and the DRX long cycle start offset. That is, parameters except the DRX long cycle start offset in the DRX parameter group #1, the DRX parameter group #2, and the DRX parameter group #3 are completely different.

In another possible implementation, the DRX parameter group #1 includes the DRX on duration timer, the DRX inactivity timer, and the DRX long cycle start offset; the DRX parameter group #2 includes the DRX on duration timer, the DRX downlink retransmission timer, the DRX uplink retransmission timer, the DRX downlink hybrid automatic repeat request round trip time timer, the DRX uplink hybrid automatic repeat request round trip time timer, and the DRX long cycle start offset; and the DRX parameter group #3 includes the DRX on duration timer, the DRX short cycle, the DRX slot offset, and the DRX long cycle start offset. That is, in addition to the DRX long cycle start offset, the DRX parameter group #1, the DRX parameter group #2, and the DRX parameter group #3 further include a same parameter (the DRX on duration timer). An offset of the DRX on duration timer in the DRX parameter group #1 is 0 ms, an offset of the DRX on duration timer in the DRX parameter group #2 is 17 ms, and an offset of the DRX on duration timer in the DRX parameter group #3 is 34 ms, that is, starts of offsets of the DRX on duration timers included in the three DRX parameter groups are different. In one case, an offset of the DRX on duration timer in any one of the three DRX parameter groups is used. In another case, a maximum or minimum offset of the DRX on duration timer in the three DRX parameter groups is used. In still another case, an offset of the DRX on duration timer in the parameter group #1, the DRX parameter group #2, or the DRX parameter group #3 is fixedly used.

It can be learned that, in either of Manner 1 and Manner 2, a manner in which a plurality of values of a same parameter are allowed to take effect simultaneously at a same moment makes DRX parameter configuration more flexible, and further facilitates matching between an XR video service and a DRX technology.

For example, the second configuration information is configured by using RRC signaling. That the second configuration information is configured by using RRC signaling may be understood as that the second configuration information is carried in the RRC signaling.

In a possible implementation, the first configuration information and the second configuration information may be configured by using same RRC signaling or different RRC signaling. This is not limited herein.

1103: The terminal device monitors a channel and/or a signal in the active period.

For example, step 1103 may be understood as that the terminal device monitors a channel and/or a signal in the active period, to obtain the video service.

It can be learned that, in the foregoing technical solution, the access network device sends the first configuration information and the second configuration information separately, so that the M parameters in the first configuration information and the L parameters in the second configuration information can be for determining the active period of the terminal device in the first time domain resource. In other words, at a same time point, the active period of the terminal device may be jointly determined based on a plurality of parameters from different configuration information, so that DRX parameter configuration is more flexible, and this further facilitates matching between the XR video service and the DRX technology.

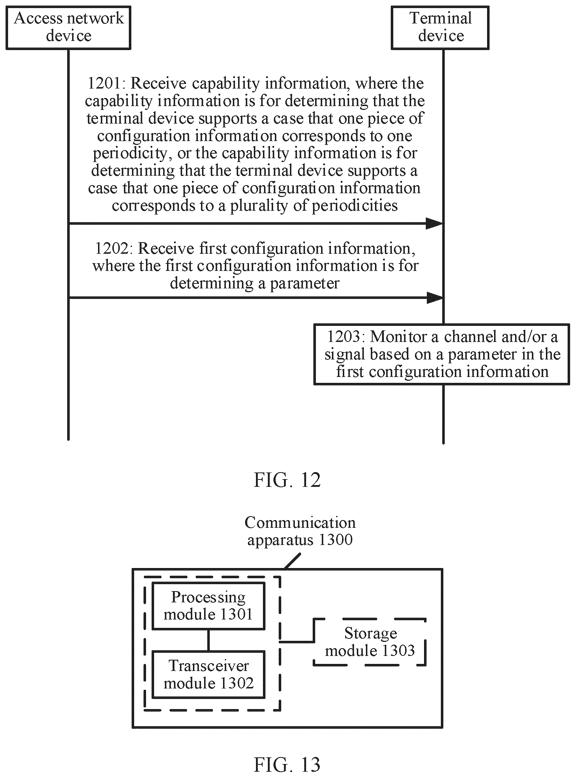

Currently, the access network device generally configures DRX configuration information when learning that a video service is transmitted, and then delivers the DRX configuration information to the terminal device, so that the terminal device receives the video service based on the DRX configuration information. However, the DRX configuration information is determined by the access network device, in other words, the access network device cannot determine whether the DRX configuration information meets a requirement of the terminal device. This may cause an increase in a data processing error rate and an increase in a data packet transmission delay because the configuration information is out of a capability range of the terminal device. To resolve this problem, refer to FIG. 12. FIG. 12 is a schematic flowchart of yet another communication method according to an embodiment of this application. The method includes but is not limited to the following steps:

1201: An access network device receives capability information, where the capability information is for determining that a terminal device supports a case that one piece of configuration information corresponds to one periodicity, or the capability information is for determining that a terminal device supports a case that one piece of configuration information corresponds to a plurality of periodicities.

Correspondingly, the terminal device sends the capability information.

For example, in FIG. 12, for a DRX mechanism, the periodicity may be a DRX cycle; for an SPS mechanism and a CG mechanism, the periodicity may be a periodicity; and for an SSS mechanism, PDCCH monitoring, or the like, the periodicity is a monitoring periodicity.

The configuration information in step 1201 may be understood as DRX-Config, DRX-ConfigSecondaryGroup, SPS-config, or the like. This is not limited herein.

That the capability information is for determining that a terminal device supports a case that one piece of configuration information corresponds to one periodicity may be understood as that the capability information is for determining that the terminal device supports a case that one piece of configuration information corresponds to only one periodicity.

For example, the terminal device supports a case that one DRX-Config corresponds to only one DRX cycle, where the DRX cycle is 16 ms.

The plurality of periodicities are different, for example, at least two of the plurality of periodicities are different.

For example, DRX cycles supported by the terminal device are respectively 16 ms, 16 ms, and 17 ms. 16 ms and 17 ms are different DRX cycles.

For example, one bit may indicate that the terminal device supports the case that one piece of configuration information corresponds to one periodicity, or that the terminal device supports the case that one piece of configuration information corresponds to a plurality of periodicities. For example, if a bit state is 1, it indicates that the terminal device supports the case that one piece of configuration information corresponds to one periodicity; or if a bit state is 0, it indicates that the terminal device supports the case that one piece of configuration information corresponds to a plurality of periodicities. For another example, if there is a field carrying the bit, it indicates that the terminal device supports the case that one piece of configuration information corresponds to one periodicity; or if there is no field carrying the bit, it indicates that the terminal device supports the case that one piece of configuration information corresponds to a plurality of periodicities.

1202: The terminal device receives first configuration information, where the first configuration information is for determining a parameter.

Correspondingly, the access network device sends the first configuration information. The access network device may send the first configuration information based on the capability information.

For example, a parameter in the first configuration information may include a parameter for determining a periodicity, and/or the parameter in the first configuration information includes another parameter for determining an offset. For the DRX mechanism, the parameter in the first configuration information includes a parameter for determining a DRX cycle, and/or the parameter in the first configuration information includes another parameter for determining an offset. For the SPS mechanism and the CG mechanism, the parameter in the first configuration information include a parameter for determining a periodicity. For the SSS mechanism, PDCCH monitoring, or the like, the parameter in the first configuration information includes a parameter for determining a monitoring periodicity, and/or the parameter in the first configuration information includes another parameter for determining an offset.

In addition, for the DRX mechanism, the parameter in the first configuration information may further include at least one of the following: a DRX on duration timer, a DRX inactivity timer, a DRX short cycle timer, a DRX downlink retransmission timer, a DRX uplink retransmission timer, a DRX downlink hybrid automatic repeat request round trip time timer, a DRX uplink hybrid automatic repeat request round trip time timer, a DRX short cycle, and a DRX slot offset. For the SPS mechanism, the parameter in the first configuration information may further include at least one of the following: a quantity of HARQ processes and a PUCCH resource. For the CG mechanism, the parameter in the first configuration information may further include at least one of the following: a quantity of HARQ processes and an MCS table. For the SSS mechanism, the parameter in the first configuration information may further include at least one of the following: an aggregation level, a quantity of candidate PDCCHs corresponding to the aggregation level, a time domain length, a to-be-monitored symbol in a slot, and a search space type.

In a possible implementation, the capability information is further for determining that the terminal device supports at least one of the following: there are a plurality of discontinuous active periods in one periodicity; K parameter groups, where parameters in the K parameter groups are for determining an active period in a first time domain resource, there are at least two parameter groups in the K parameter groups, and parameters included in one of the two parameter groups are completely different from parameters included in the other parameter group, or parameters included in one of the two parameter groups are partially different from parameters included in the other parameter group, where K is an integer greater than or equal to 2; a periodicity included in the parameter in the first configuration information is determined based on a first periodicity and an offset of the first periodicity; and the parameter in the first configuration information is predefined.

That there are a plurality of discontinuous active periods in one periodicity may be understood as that there are a plurality of DRX on duration timers in one DRX cycle, and running time of the plurality of DRX on duration timers are discontinuous. For example, a DRX cycle is 50 ms, the DRX cycle includes three DRX on duration timers, and offsets of the three DRX on duration timers are respectively 0 ms, 17 ms, and 34 ms. It can be learned that running time of the three DRX on duration timers are discontinuous.

For example, a periodicity included in one of the two parameter groups is different from a periodicity included in the other parameter group, or a periodicity included in one of the two parameter groups is the same as a periodicity included in the other parameter group; and/or an offset included in one of the two parameter groups is different from an offset included in the other parameter group.

For example, DRX cycles in three DRX parameter groups are all 50 ms, and offsets of the DRX cycles in the three DRX parameter groups are respectively 0 ms, 17 ms, and 34 ms, that is, the DRX cycles in the three DRX parameter groups are the same, and the offsets in the three DRX parameter groups are different.

For another example, DRX cycles in three DRX parameter groups are respectively 17 ms, 17 ms, and 16 ms, and offsets of the DRX cycles in the three DRX parameter groups are respectively 0 ms, 17 ms, and 34 ms, that is, DRX cycles of two of the three DRX parameter groups are the same, which are both 17 ms, and the offsets in the three DRX parameter groups are different.

For example, that parameters in the K parameter groups are for determining an active period in a first time domain resource may be understood as that the parameters in the K parameter groups are used by the terminal device in the first time domain resource, to determine the active period.

For example, there may be one or more offsets of the first periodicity. In a possible implementation, that a periodicity included in the parameter in the first configuration information is determined based on a first periodicity and an offset of the first periodicity may be understood as that an offset of a DRX on duration timer of a DRX cycle included in the parameter in the first configuration information is determined based on the first DRX cycle and the offset of the first DRX cycle.

For example, the first DRX cycle is 16 ms, and the offset of the first DRX cycle is [1, 1, 0]. Offsets of DRX on duration timers of three DRX cycles included in the parameters in the configuration information are determined based on the first DRX cycle and the offset of the first DRX cycle, and the offsets of the DRX on duration timers of the three DRX cycles are respectively 34 ms, 17 ms, and 0 ms.

For example, that the parameter in the first configuration information is predefined may be understood as that the parameter in the first configuration information is predefined by the access network device or the terminal device. This is not limited herein. For example, the access network device or the terminal device determines the parameter in the first configuration information using a preset formula. In a possible implementation, the preset formula is related to a frame rate. In another possible implementation, the preset formula may be for determining the DRX cycle and the offset. For example, an n^{th} DRX cycle=fun(T*n)-fun(T*(n-1)), where fun is a rounding function, and n is a positive integer. For another example, start of an n^{th} DRX cycle=fun(T*(n-1))+startoffset, where fun is a rounding function, n is a positive integer, and startoffset is a start moment or an offset of the DRX.

For example, one bit indicates that the terminal device supports the case that there are a plurality of discontinuous active periods in one periodicity, or the terminal device supports K parameter groups, or the terminal device supports the case that a periodicity included in the parameter in the first configuration information is determined based on the first periodicity and the offset of the first periodicity, or the terminal device supports the case that the parameter in the first configuration information is predefined. For example, if a bit state is 1, it indicates that the terminal device supports the case that there are a plurality of discontinuous active periods in the first periodicity. For example, if a bit state is 0, it indicates that the terminal device supports K parameter groups. For example, if a field carrying the one bit appears, it indicates that the terminal device supports the case that there are a plurality of discontinuous active periods in one periodicity. For example, if a field carrying the one bit does not appear, it indicates that the terminal device supports K parameter groups.

It can be learned that, in the foregoing technical solution, after the terminal device reports the capability information, the access network device may learn of a capability supported by the terminal device, so that configured configuration information can meet a requirement of the terminal device. This avoids an increase in a data processing error rate and an increase in a data packet transmission delay that are caused because the configuration information is out of a capability range of the terminal device.

In another possible implementation, the capability information is further for determining whether the terminal device supports at least one of the following: there are a plurality of discontinuous active periods in one periodicity; K parameter groups; a periodicity included in the parameter in the first configuration information is determined based on a first periodicity and an offset of the first periodicity; and the parameter in the first configuration information is predefined.

For example, one bit indicates whether the terminal device supports the case that there are a plurality of discontinuous active periods in one periodicity. For example, if a bit state is 1, it indicates that the terminal device supports the case that there are a plurality of discontinuous active periods in the first periodicity; or if a bit state is 0, it indicates that the terminal device does not support the case that there are a plurality of discontinuous active periods in the first periodicity. For example, that a field carrying the one bit appears indicates that the terminal device supports the case that there are a plurality of discontinuous active periods in one periodicity; and that a field carrying the one bit does not appear indicates that the terminal device does not support the case that there are a plurality of discontinuous active periods in the first periodicity.

It can be learned that, in the foregoing technical solution, after the terminal device reports the capability information, the access network device may learn of a capability supported and/or a capability not supported by the terminal device, so that configured configuration information can meet a requirement of the terminal device. In addition, this avoids an increase in a data processing error rate and an increase in a data packet transmission delay that are caused because the configuration information is out of a capability range of the terminal device.

In still another possible implementation, the capability information is further for determining at least one of the following: a frame rate of a video service supported by the terminal device; a minimum frame rate of a video service supported by the terminal device; and a maximum frame rate of a video service supported by the terminal device. For example, at least one of the following: the frame rate of the video service supported by the terminal device; a minimum frame rate of the video service supported by the terminal device; or a maximum frame rate of the video service supported by the terminal device may be carried in downlink control information (uplink control information, UCI), for example, a packet header of the UCI. Alternatively, when uplink data is transmitted, at least one of the following is carried in the first data packet: a frame rate of a video service supported by the terminal device; a minimum frame rate of a video service supported by the terminal device; and a maximum frame rate of a video service supported by the terminal device. Alternatively, when uplink data is transmitted, at least one of the following is carried in any data packet: a frame rate of a video service supported by the terminal device; a minimum frame rate of a video service supported by the terminal device; and a maximum frame rate of a video service supported by the terminal device.

For example, two bits indicate the frame rate of the video service supported by the terminal device. If a bit state is 00, it indicates that the terminal device supports 30 fps; if a bit state is 01, it indicates that the terminal device supports 60 fps; if a bit state is 10, it indicates that the terminal device supports 90 fps; or if a bit state is 11, it indicates that the terminal device supports 120 fps.

For another example, one bit indicates the minimum frame rate of the video service supported by the terminal device or the maximum frame rate of the video service supported by the terminal device. If a bit state is 1, it indicates the minimum frame rate of the video service supported by the terminal device or the maximum frame rate of the video service supported by the terminal device; or if a bit state is 0, it indicates the minimum frame rate of the video service supported by the terminal device or the maximum frame rate of the video service supported by the terminal device.

It can be learned that, in the foregoing technical solution, after the terminal device reports at least one of the following: a frame rate of a video service supported by the terminal device; a minimum frame rate of a video service supported by the terminal device; and a maximum frame rate of a video service supported by the terminal device, configuration information configured by the access network device can meet a requirement of the terminal device. In addition, this avoids an increase in a data processing error rate and an increase in a data packet transmission delay that are caused because the configuration information is out of a capability range of the terminal device.

It should be noted that, for example, in the embodiment shown in FIG. 12, any one or more types of information indicated by the capability information may be carried in same signaling or different signaling. This is not limited herein. In a possible implementation, the terminal device may report the any one or more types of information indicated by the capability information. This is not limited herein. In addition, the any one or more types of information indicated by the capability information may be carried by using a same parameter or different parameters.

1203: The terminal device monitors a channel and/or a signal based on the parameter in the first configuration information.

For example, step 1203 may be understood as that the terminal device monitors a channel and/or a signal in the active period based on the parameter in the first configuration information, to obtain the video service.

It can be learned that, in the foregoing technical solutions, after the terminal device reports the capability information, the access network device may learn of the capability supported by the terminal device, so that the configured configuration information can meet the requirement of the terminal device. In addition, this avoids the increase in the data processing error rate and the increase in the data packet transmission delay that are caused because the configuration information is out of the capability range of the terminal device.

To better avoid a problem that a transmission delay of a video service is excessively high because a non-integer periodicity of the video service does not match an integer DRX cycle, in embodiments of this application, the terminal device may further determine DRX parameters, for example, a DRX cycle and an offset. The terminal device may determine DRX parameters in any one of the following manners.

### Manner 1

The terminal device determines a first length or a second length of a plurality of DRX cycles in a DRX cycle mode based on N and L; and the terminal device obtains an offset of a DRX cycle that is associated with the first length or the second length and that is in the plurality of DRX cycles, or the terminal device obtains a DRX sequence number of a DRX cycle that is associated with the first length or the second length and that is in the plurality of DRX cycles. The first length may be a DRX cycle with a maximum length in the plurality of DRX cycles, and the second length may be a DRX cycle with a minimum length in the plurality of DRX cycles.

N is a quantity of DRX cycles in the DRX cycle mode, L is a total length of N DRX cycles, and N and L are integers greater than 0. For example, N may be 3 or 9, and L may be 25, 50, or 100. For example, N and L are related to the frame rate. One DRX cycle mode corresponds to one frame rate. For example, refer to Table. 3. With reference to Table 3, it can be learned that the frame rate is 30, N may be 3, and L may be 100 ms. That is, a total length of three DRX cycles is 100 ms. The rest is similar to this example, and details are not described herein again.

**Table 3**

| Frame rate (fps) | N | L (ms) |
|---|---|---|
| 30 | 3 | 100 |
| 60 | 3 | 50 |
| 90 | 9 | 100 |
| 120 | 3 | 25 |

For example, a correspondence between N, L, and the frame rate may be predefined, or may be delivered by the access network device through signaling, for example, DCI or a MAC CE. In a possible implementation, when the correspondence between N, L, and the frame rate is delivered by the access network device through signaling, one bit may indicate N, and two bits may indicate L. For example, when one bit indicates N, if a bit state is 0, it indicates that N is 3; or if a bit state is 1, it indicates that N is 9. Alternatively, if a field carrying the one bit exists, it indicates that N is 3; or if no field carrying the one bit exists, it indicates that N is 9. When the two bits indicate L, if a bit state is 00, it indicates that L is 25; if a bit state is 01, it indicates that L is 50; or if a bit state is 10, it indicates that L is 100. For a subsequent indication that may indicate a frame rate to be extended, refer to the indication manner described above. In another possible implementation, when the correspondence among N, L, and the frame rate is delivered by the access network device by using signaling, two bits may jointly indicate N and L. This is similar to an indication manner of a start offset of a DRX long cycle. For example, if the bit state is 00, it indicates that N is 3 and L is 100. Alternatively, if the bit state is 01, it indicates that N is 3 and L is 50. Alternatively, if the bit state is 10, it indicates that N is 9 and L is 100. Alternatively, if the bit state is 11, it indicates that N is 3 and L is 25.

For example, in the DRX cycle mode, the first length of the plurality of DRX cycles may be based on F(L/N). F(.) represents a round-up function, a round-down function, or a round-off function. The second length of the plurality of DRX cycles in the DRX cycle mode may be determined based on Q(L/N) or F(L/N)-1. Q(.) represents a round-up function, a round-down function, or a round-off function.

For example, a quantity of DRX cycles of the first length in the plurality of DRX cycles in the DRX cycle mode may be determined based on L mod N. A quantity of DRX cycles of the second length in the plurality of DRX cycles in the DRX cycle mode may be determined based on N-(L mod N).

For example, a frame rate of a video service is 60 fps, N is 3, and L is 50. In the DRX cycle mode, the first length of the plurality of DRX cycles is F(L/N)=F(50/3)=17 ms. In the DRX cycle mode, the second length of the plurality of DRX cycles is F(L/N)-1=F(50/3)-1=16 ms. The quantity of DRX cycles of the first length in the plurality of DRX cycles in the DRX cycle mode is: L mod N=50 mod 3=2. The quantity of DRX cycles of the first length in the plurality of DRX cycles in the DRX cycle mode is: N-(L mod N)=3-(50 mod 3)=1. Table 4 shows a plurality of DRX cycles in a DRX cycle mode corresponding to different frame rates determined according to the foregoing method. With reference to Table 4, it can be learned that the frame rate is 30, N is 3, and the DRX cycles are 34 ms, 33 ms, and 33 ms respectively. The rest is similar to this example, and details are not described herein again.

**Table 4**

| Frame rate (fps) | N | DRX cycle (ms) |
|---|---|---|
| 30 | 3 | [34, 33, 33] |
| 60 | 3 | [17, 17, 16] |
| 90 | 9 | [12, 11, 11, 11, 11, 11, 11, 11, 11] |
| 120 | 3 | [9, 8, 8] |

In a possible implementation, the offset of the DRX cycle that is associated with the first length or the second length and that is in the plurality of DRX cycles, or the DRX sequence number of the DRX cycle that is associated with the first length or the second length and that is in the plurality of DRX cycles may be predefined. In another possible implementation, the offset of the DRX cycle that is associated with the first length or the second length and that is in the plurality of DRX cycles, or the DRX sequence number of the DRX cycle that is associated with the first length or the second length and that is in the plurality of DRX cycles is indicated by the access network device by using indication information in signaling.

For example, the access network device informs the offset of the DRX cycle that is associated with the first length or the second length and that is in the plurality of DRX cycles or the DRX sequence number of the DRX cycle that is associated with the first length or the second length and that is in the plurality of DRX cycles in a manner of bitmap (bitmap). For example, the access network device may use three bits to carry the indication information. If a bit state is [1, 0, 0], it indicates that an offset of a DRX cycle that is associated with the first length and that is in the plurality of DRX cycles is in the first bit, and an offset of a DRX cycle that is associated with the second length and that is in the plurality of DRX cycles is in the second bit and the third bit. Alternatively, if a bit state is [0, 0, 1], it indicates that an offset of a DRX cycle that is associated with the first length and that is in the plurality of DRX cycles is in the third bit, and an offset of a DRX cycle that is associated with the second length and that is of the plurality of DRX cycles are in the first bit and the second bit.

For another example, the access network device indicates, by using bit states of a plurality of bits, the offset of the DRX cycle that is associated with the first length or the second length and that is in the plurality of DRX cycles, or the DRX sequence number of the DRX cycle that is associated with the first length or the second length and that is in the plurality of DRX cycles. For example, two bits are used to carry the indication information. If a bit state is 00, it indicates that an offset of a DRX cycle that is associated with the first length and that is in the plurality of DRX cycles is in the first bit. Alternatively, if a bit state is 01, it indicates that an offset of a DRX cycle that is associated with the first length and that is in the plurality of DRX cycles is in the second bit. Alternatively, if a bit state is 10, it indicates that an offset of a DRX cycle that is associated with the first length and that is in the plurality of DRX cycles is in the third bit. Alternatively, if a bit state is 11, it indicates that an offset of a DRX cycle that is associated with the first length and that is in the plurality of DRX cycles is in the first bit and the second bit.

### Manner 2

The terminal device determines a greatest common divisor X of [frame rate/10] and M; the terminal device determines X based on N and L; the terminal device determines a plurality of DRX cycles in a DRX cycle mode based on N and L; and the terminal device obtains an offset of a DRX cycle that is associated with a first length or a second length and that is in the plurality of DRX cycles, or the terminal device obtains a DRX sequence number of a DRX cycle that is associated with a first length or a second length and that is in a plurality of DRX cycles. In other words, it can be learned that Manner 2 is similar to Manner 1. A difference lies in that, in Manner 2, the terminal device first determines the greatest common divisor X of [frame rate/10] and M, and then determines N and L based on X.

For example, M may be predefined or may be indicated by the access network device by using signaling. This is not limited herein. M is 4 or 100. For example, when a frame rate of a video service is 30 fps, X is: maximum common divisor {[30/10], 100}=1. When a frame rate of a video service is 60 fps, X is: maximum common divisor {[60/10], 100}=2. When a frame rate of a video service is 90 fps, X is: maximum common divisor {[90/10], 100}=1. When a frame rate of a video service is 120 fps, X is: maximum common divisor {[120/10], 100}=4.

For example, N may be obtained by calculating frame rate/10/X. For example, when a frame rate of a video service is 30 fps, X is 1, and N is 30/10/1=3. When a frame rate of a video service is 60 fps, X is 2, and N is 60/10/2=3. When a frame rate of a video service is 90 fps, X is 1, and N is 90/10/1=9. When a frame rate of a video service is 120 fps, X is 4, and N is 120/10/4=3.

For example, L may be obtained by calculating Y/X. Y may be predefined or may be indicated by the access network device by using signaling. This is not limited herein. Y may be 100. For example, when a frame rate of a video service is 30 fps, X is 1, and L is 100/1=100. When a frame rate of a video service is 60 fps, X is 2, and L is 100/2=50. When a frame rate of a video service is 90 fps, X is 1, and L is 100/1=100. When a frame rate of a video service is 120 fps, X is 4, and L is 100/4=25.

### Manner 3

The terminal device obtains a first DRX cycle in a plurality of DRX cycles in a first DRX cycle mode, where the first DRX cycle mode corresponds to a video service whose frame rate is K, and the first DRX cycle is a DRX cycle with the maximum or minimum length in the plurality of DRX cycles in the first DRX cycle mode; the terminal device determines a first length or a second length of a plurality of DRX cycles in a second DRX cycle mode based on the first DRX cycle, K, and a frame rate S, where the second DRX cycle mode corresponds to a video service whose frame rate is S, the first length may be a DRX cycle with a maximum length in the plurality of DRX cycles in the second DRX cycle mode, and the second length may be a DRX cycle with a minimum length in the plurality of DRX cycles in the second DRX cycle mode; the terminal device determines, based on N and L associated with the frame rate S, a quantity of DRX cycles of the first length or the second length of the plurality of DRX cycles in the second DRX cycle mode; and the terminal device obtains an offset of a DRX cycle that is associated with the first length or the second length and that is in the plurality of DRX cycles in the second DRX cycle mode, or the terminal device obtains a DRX sequence number of a DRX cycle that is associated with the first length or the second length and that is in the plurality of DRX cycles in the second DRX cycle mode.

For example, the first DRX cycle in the plurality of DRX cycles in the first DRX cycle mode may be predefined, or may be indicated by the access network device by using signaling. For example, the first DRX cycle is a DRX cycle with the maximum length in the plurality of DRX cycles in the first DRX cycle mode, and the first DRX cycle is T; and the first DRX cycle is a DRX cycle with the minimum length in the plurality of DRX cycles in the first DRX cycle mode, and the first DRX cycle is T-1. It may be understood that, if that the first DRX cycle is a DRX cycle with the maximum length in the plurality of DRX cycles in the first DRX cycle mode is predefined or is indicated by the access network device by using signaling, the terminal device may further determine a DRX cycle with the minimum length in the plurality of DRX cycles in the first DRX cycle mode; and vice versa.

For example, the first length of the plurality of DRX cycles in the second DRX cycle mode is F(T*(X/S)); and the second length of the plurality of DRX cycles in the second DRX cycle mode is F(T*(X/S))-1 or Q(T*(X/S)).

For example, a frame rate of a video service is 60 fps, then X is 30, S is 60, and T is 34. The first length is F(T*(X/S))=F(34*30/60)=17 ms. The second length is F(T*(X/S))-1=16 ms.

For the correspondence among N, L, and a frame rate, a manner of determining the quantity of DRX cycles of the first length or the second length of the plurality of DRX cycles in the second DRX cycle mode, that the terminal device obtains the offset of the DRX cycle associated with the first length or the second length of the plurality of DRX cycles in the second DRX cycle mode, or the terminal device obtains the DRX sequence number of the DRX cycle associated with the first length or the second length of the plurality of DRX cycles in the second DRX cycle mode, refer to Manner 1. Details are not described herein again.

It can be learned that in any one of Manner 1 to Manner 3, the terminal device determines the DRX cycle and the offset, so that the terminal device determines the DRX cycle and the offset, which can meet a requirement of the terminal device. For example, this avoids a problem that a transmission delay of a video service is excessively long because a non-integer periodicity of a video service does not match an integer DRX cycle, and also avoids a case that the delay exceeds a PDB of the video service, thereby improving a network capacity. In addition, the terminal device can more flexibly use different DRX cycles and offsets, to adapt to the periodicity of the video service, and reduce a quantity of invalid blind detections on a downlink control channel. In addition, in some other cases, if the terminal device has an excessive quantity of invalid blind detections in the active period, to complete transmission of a related video service, wake-up time of the terminal device needs to be prolonged by using a DRX inactivity timer. DRX parameters adapted to the video service can help the terminal device reduce duration of the wake-up state, increase sleep time of the terminal device, and save energy.

The foregoing mainly describes the solutions provided in this application from a perspective of interaction between devices. It may be understood that in the foregoing implementations, to implement the foregoing functions, each device includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device or the access network device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in this embodiment of this application, division into the modules is an example, and is merely a logical function division. During actual implementation, another division manner may be used.

If the integrated module is used, refer to FIG. 13. FIG. 13 is a schematic of a structure of a communication apparatus according to an embodiment of this application. The communication apparatus 1300 is applicable to the methods shown in FIG. 9 to FIG. 12. As shown in FIG. 13, the communication apparatus 1300 includes a processing module 1301 and a transceiver module 1302. The processing module 1301 may be one or more processors, and the transceiver module 1302 may be a transceiver or a communication interface. The communication apparatus may be configured to implement a function of the terminal device or the access network device in any one of the foregoing method embodiments, or configured to implement a function of the network element in any one of the foregoing method embodiments. The network element or network function may be a network element in a hardware device, a software function running on dedicated hardware, or a virtualization function instantiated on a platform (for example, a cloud platform). For example, the communication apparatus 1300 may further include a storage module 1303, configured to store program code and data that are of the communication apparatus 1300.

In an instance, when the communication apparatus is used as the terminal device or a chip used in the terminal device, the communication apparatus performs the steps performed by the terminal device in the foregoing method embodiments. The transceiver module 1302 is configured to support communication with the access network device and the like. The transceiver module specifically performs sending and/or receiving actions performed by the terminal device in FIG. 9 to FIG. 12, for example, supports the terminal device in performing step 901, and/or performing another process of the technology described in this specification. The processing module 1301 may be configured to support the communication apparatus 1300 in performing the processing action in the foregoing method embodiments, for example, support the terminal device in performing step 903, and/or performing another process of the technology described in this specification.

For example, the transceiver module 1302 is configured to receive first configuration information, where the first configuration information is for determining N first parameter sets and one second parameter set, the second parameter set is a common parameter set of the N first parameter sets, the first parameter set includes one or more parameters for determining a periodicity and/or an offset, and N is an integer greater than or equal to 2; the transceiver module 1302 is configured to receive second configuration information, where the second configuration information indicates a terminal device to use at least one of the N first parameter sets; and the processing module 1301 is configured to monitor a channel and/or a signal based on the second parameter set and the at least one first parameter set.

For another example, the transceiver module 1302 is configured to receive first configuration information, where the first configuration information is for determining one first parameter set and one second parameter set, and the first parameter set includes one or more parameters for determining a periodicity and/or an offset; the transceiver module 1302 is configured to receive second configuration information, where the second configuration information is for determining one third parameter set, and the third parameter set includes one or more parameters for determining a periodicity and/or an offset; and the processing module 1301 is configured to monitor a channel and/or a signal based on the second parameter set and the third parameter set, where the second parameter set is a common parameter set of the first parameter set and the third parameter set.

For another example, the transceiver module 1302 is configured to receive first configuration information, where the first configuration information includes M parameters, and M is an integer greater than or equal to 1; the transceiver module 1302 is configured to receive second configuration information, where the second configuration information includes L parameters, L is an integer greater than or equal to 1, and the M parameters and the L parameters are for determining an active period in a first time domain resource; and the processing module 1301 is configured to monitor a channel and/or a signal in the active period.

For another example, the transceiver module 1302 is configured to send capability information, where the capability information is for determining that a terminal device supports a case that one piece of configuration information corresponds to one periodicity, or the capability information is for determining that a terminal device supports a case that one piece of configuration information corresponds to a plurality of periodicities; the transceiver module 1302 is configured to receive first configuration information, where the first configuration information is for determining a parameter; and the processing module 1301 is configured to monitor a channel and/or a signal based on a parameter in the first configuration information.

In an instance, when the communication apparatus is used as the access network device or a chip used in the access network device, the communication apparatus performs the steps performed by the access network device in the foregoing method embodiments. The transceiver module 1302 is configured to support communication with the terminal device and the like. The transceiver module specifically performs sending and/or receiving actions performed by the access network device in FIG. 9 to FIG. 12, for example, supports the access network device in performing step 902, and/or performing another process of the technology described in this specification. The processing module 1301 may be configured to support the communication apparatus 1300 in performing a processing action in the foregoing method embodiments, for example, may be configured to support the access network device in performing another process of the technology described in this specification.

For example, the transceiver module 1302 is configured to send first configuration information, where the first configuration information is for determining N first parameter sets and one second parameter set, the second parameter set is a common parameter set of the N first parameter sets, the first parameter set includes one or more parameters for determining a cycle and/or an offset, and N is an integer greater than or equal to 2; and the transceiver module 1302 is configured to send second configuration information, where the second configuration information indicates a terminal device to use at least one of the N first parameter sets.

For another example, the transceiver module 1302 is configured to send first configuration information, where the first configuration information is for determining one first parameter set and one second parameter set, and the first parameter set includes one or more parameters for determining a periodicity and/or an offset; and the transceiver module 1302 is configured to sending second configuration information, where the second configuration information is for determining one third parameter set, the third parameter set includes one or more parameters for determining a periodicity and/or an offset, and the second parameter set is a common parameter set of the first parameter set and the third parameter set.

For another example, the transceiver module 1302 is configured to send first configuration information, where the first configuration information includes M parameters, and M is an integer greater than or equal to 1; and the transceiver module 1302 is configured to send second configuration information, where the second configuration information includes L parameters, L is an integer greater than or equal to 1, and the M parameters and the L parameters are for determining an active period in a first time domain resource.

For another example, the transceiver module 1302 is configured to receive capability information, where the capability information is for determining that a terminal device supports a case that one piece of configuration information corresponds to one periodicity, or the capability information is for determining that a terminal device supports a case that one piece of configuration information corresponds to a plurality of periodicities; and the transceiver module 1302 is configured to send first configuration information based on the capability information, where the first configuration information is for determining a parameter.

In a possible implementation, when the terminal device or the access network device is a chip, the transceiver module 1302 may be a communication interface, a pin, a circuit, or the like. The communication interface may be configured to input to-be-processed data into a processor, and may output a processing result of the processor to the outside. During specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 1301 may be a processor. The processor may execute computerexecutable instructions stored in a storage module, so that the chip performs the methods according to the embodiments in FIG. 9 to FIG. 12.

Further, the processor may include a controller, an arithmetic unit, and a register. For example, the controller is mainly responsible for instruction decoding, and transmitting a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an application-specific integrated circuit (application-specific integrated circuit, ASIC) architecture, a microprocessor without interlocked piped stages architecture (microprocessor without interlocked piped stages architecture, MIPS), an advanced reduced instruction set computing machine (advanced RISC machine, ARM) architecture, a network processor (network processor, NP) architecture, or the like. The processor may be a single-core or multi-core processor.

The storage module may be a storage module inside the chip, for example, a register or a cache. Alternatively, the storage module may be a storage module located outside the chip, for example, a read-only memory (Read-Only Memory, ROM), another type of static storage device that can store static information and instructions, or a random access memory (Random Access Memory, RAM).

It should be noted that a function corresponding to each of the processor and the interface may be implemented by using a hardware design, may be implemented by using a software design, or may be implemented by a combination of software and hardware. This is not limited herein.

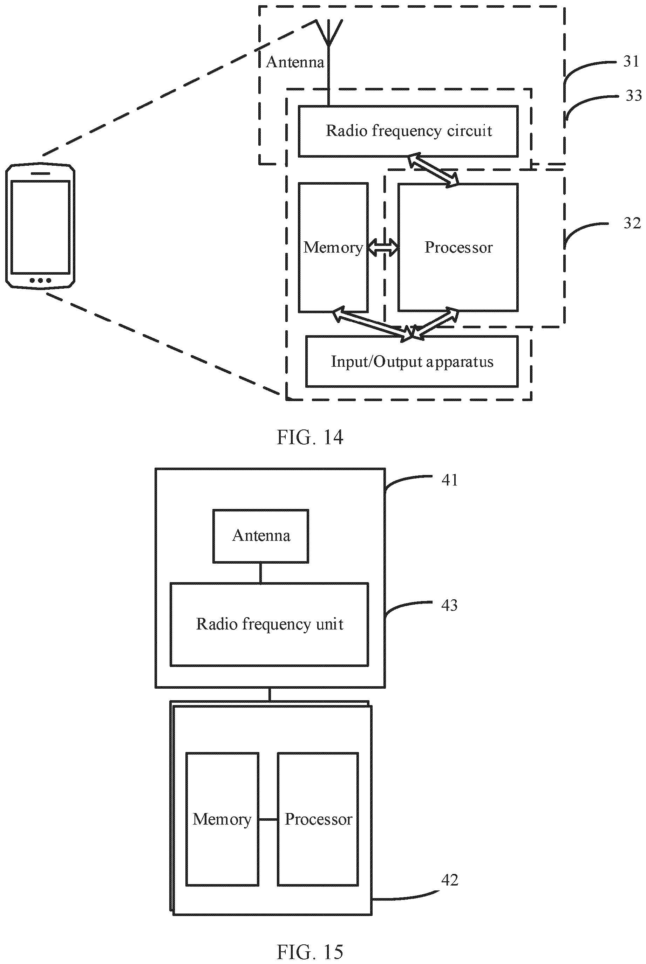

FIG. 14 is a simplified schematic of a structure of a terminal device according to an embodiment of this application. For ease of understanding and illustration, in FIG. 14, a mobile phone is used as an example of the terminal device. As shown in FIG. 14, the terminal device includes at least one processor, and may further include a radio frequency circuit, an antenna, and an input/output apparatus. The processor may be configured to process a communication protocol and communication data, and may be further configured to control the terminal device, execute a software program, process data of the software program, and the like. The terminal device may further include a memory. The memory is mainly configured to store a software program and data. These related programs may be loaded into the memory when the communication apparatus is delivered from a factory, or may be loaded into the memory when needed subsequently. The radio frequency circuit is mainly configured to: perform conversion between a baseband signal and a radio frequency signal, and process the radio frequency signal. The antenna is mainly configured to receive/send a radio frequency signal in an electromagnetic wave form, and the antenna is the antenna provided in embodiments of this application. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 14 shows only one memory and one processor. In an actual terminal device product, there may be one or more processors and one or more memories. The memory may also be referred to as a storage medium, a storage device, or the like. The memory may be disposed independent of the processor, or may be integrated into the processor. This is not limited in this embodiment of this application.

In this embodiment of this application, an antenna having sending and receiving functions and the radio frequency circuit may be considered as a receiving unit and a sending unit (which may also be collectively referred to as a transceiver unit) of the terminal device, and a processor having a processing function may be considered as a processing unit of the terminal device. As shown in FIG. 14, the terminal device includes a receiving module 31, a processing module 32, and a sending module 33. The receiving module 31 may also be referred to as a receiver, a receiving machine, a receiver circuit, or the like. The sending module 33 may also be referred to as a sender, a transmitter, a transmitter machine, a transmitter circuit, or the like. The processing module 32 may also be referred to as a processor, a processing board, a processing apparatus, or the like.

For example, the processing module 32 is configured to perform functions of the terminal device in the embodiments shown in FIG. 9 to FIG. 12.

FIG. 15 is a simplified schematic of a structure of an access network device according to an embodiment of this application. The access network device includes a baseband part 42 and a part for radio frequency signal transmission/reception and conversion. The part for radio frequency signal transmission/reception and conversion further includes a receiving module 41 part and a sending module 43 part (which may also be collectively referred to as a transceiver module). The part for radio frequency signal transmission/reception and conversion is mainly configured to: send/receive a radio frequency signal and perform conversion between the radio frequency signal and a baseband signal. The baseband part 42 is mainly configured to: perform baseband processing, control the access network device, and the like. The receiving module 41 may also be referred to as a receiver, a receiving machine, a receiver circuit, or the like. The sending module 43 may also be referred to as a sender, a transmitter, a transmitter machine, a transmitter circuit, or the like. The baseband part 42 is usually a control center of the access network device, and may also be referred to as a processing module, and is configured to perform the steps performed by the access network device in FIG. 9 to FIG. 12. For details, refer to the foregoing descriptions of the related parts.

The baseband part 42 may include one or more boards. Each board may include one or more processors and one or more memories. The processor is configured to read and execute a program in the memory to implement a baseband processing function and control the access network device. If there are a plurality of boards, the boards may be interconnected to improve a processing capability. In an example implementation, the plurality of boards may share one or more processors, or the plurality of boards may share one or more memories, or the plurality of boards may simultaneously share one or more processors.

For example, the sending module 43 is configured to perform functions of the access network device in the embodiments shown in FIG. 9 to FIG. 12.

An embodiment of this application further provides a communications apparatus, including a processor. The processor invokes a computer program stored in a memory to implement the embodiments shown in FIG. 9 to FIG. 12 or any one of the embodiments.

An embodiment of this application further provides a communication apparatus, including a logic circuit and an input/output interface. The logic circuit is configured to read and execute stored instructions, and when the instructions are run, the communication apparatus is enabled to perform the embodiments shown in FIG. 9 to FIG. 12 or any one of the embodiments.

An embodiment of this application further provides a computer-readable storage medium. The computer-readable storage medium stores a computer program. When the computer program is run, the embodiments shown in FIG. 9 to FIG. 12 are implemented or any one of the embodiments is implemented.

An embodiment of this application further provides a computer program product including instructions. When the computer program product is executed on a computer, the embodiments shown in FIG. 9 to FIG. 12 are performed or any one of the embodiments is performed.

The foregoing units described as separate parts may or may not be physically separate, and parts displayed as units may or may not be physical units, may be located in one position, or may be distributed on a plurality of network units. Some or all of the units may be selected based on an actual requirement, to achieve the objectives of the solutions in embodiments of this application. In addition, the network element units in embodiments of this application may be integrated into one processing unit, or each of the units may exist alone physically, or two or more units are integrated into one unit. The integrated unit may be implemented in a form of hardware, or may be implemented in a form of a software network element unit.

When the integrated unit is implemented in the form of a software network element unit and sold or used as an independent product, the integrated unit may be stored in a computer-readable storage medium. Based on such an understanding, an essentially contributing part in the technical solutions of this application, or all or some of the technical solutions may be embodied in a form of a software product. The computer software product is stored in a storage medium and includes several instructions for instructing a computer device (which may be a personal computer, a terminal device, a cloud server, an access network device, or the like) to perform all or some of the steps of the method in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc. The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving first configuration information, wherein the first configuration information is for determining N first parameter sets and one second parameter set, the second parameter set is a common parameter set of the N first parameter sets, the first parameter set comprises one or more parameters for determining a periodicity and/or an offset, and N is an integer greater than or equal to 2;
receiving second configuration information, wherein the second configuration information indicates a terminal device to use at least one of the N first parameter sets; and
monitoring a channel and/or a signal based on the second parameter set and the at least one first parameter set.

2. The method according to claim 1, wherein the periodicity is a discontinuous reception DRX cycle.

3. The method according to claim 1 or 2, wherein the second configuration information is configured by using downlink control information DCI signaling.

4. A communication method, wherein the method comprises:
receiving first configuration information, wherein the first configuration information is for determining one first parameter set and one second parameter set, and the first parameter set comprises one or more parameters for determining a periodicity and/or an offset;
receiving second configuration information, wherein the second configuration information is for determining one third parameter set, and the third parameter set comprises one or more parameters for determining a periodicity and/or an offset; and
monitoring a channel and/or a signal based on the second parameter set and the third parameter set, wherein the second parameter set is a common parameter set of the first parameter set and the third parameter set.

5. The method according to claim 4, wherein a periodicity in the first parameter set and a periodicity in the third parameter set are discontinuous reception DRX cycles.

6. The method according to claim 4 or 5, wherein the second configuration information is configured by using downlink control information DCI signaling.

7. A communication method, wherein the method comprises:
receiving first configuration information, wherein the first configuration information comprises M parameters, and M is an integer greater than or equal to 1;
receiving second configuration information, wherein the second configuration information comprises L parameters, L is an integer greater than or equal to 1, and the M parameters and the L parameters are for determining an active period in a first time domain resource; and
monitoring a channel and/or a signal in the active period.

8. The method according to claim 7, wherein the M parameters are comprised in a first parameter group, and the L parameters are comprised in a second parameter group; and
parameters comprised in the first parameter group are completely different from parameters comprised in the second parameter group, or parameters comprised in the first parameter group are partially different from parameters comprised in the second parameter group.

9. The method according to claim 8, wherein
a periodicity comprised in the first parameter group is the same as a periodicity comprised in the second parameter group, or a periodicity comprised in the first parameter group is different from a periodicity comprised in the second parameter group; and/or
an offset comprised in the first parameter group is different from an offset comprised in the second parameter group.

10. A communication method, wherein the method comprises:
sending capability information, wherein the capability information is for determining that a terminal device supports a case that one piece of configuration information corresponds to one periodicity, or the capability information is for determining that a terminal device supports a case that one piece of configuration information corresponds to a plurality of periodicities;
receiving first configuration information, wherein the first configuration information is for determining a parameter; and
monitoring a channel and/or a signal based on a parameter in the first configuration information.

11. The method according to claim 10, wherein the capability information is further for determining that the terminal device supports at least one of the following:
there are a plurality of discontinuous active periods in one periodicity;
K parameter groups, wherein parameters in the K parameter groups are for determining an active period in a first time domain resource, there are at least two parameter groups in the K parameter groups, and parameters comprised in one of the two parameter groups are completely different from parameters comprised in the other parameter group, or parameters comprised in one of the two parameter groups are partially different from parameters comprised in the other parameter group;
a periodicity comprised in the parameter in the first configuration information is determined based on a first periodicity and an offset of the first periodicity; and
the parameter in the first configuration information is predefined.

12. The method according to claim 11, wherein
a periodicity comprised in one of the two parameter groups is different from a periodicity comprised in the other parameter group, or a periodicity comprised in one of the two parameter groups is the same as a periodicity comprised in the other parameter group; and/or
an offset comprised in one of the two parameter groups is different from an offset comprised in the other parameter group.

13. The method according to any one of claims 10 to 12, wherein the capability information is further for determining at least one of the following:
a frame rate of a video service supported by the terminal device;
a minimum frame rate of a video service supported by the terminal device; and
a maximum frame rate of a video service supported by the terminal device.

14. A communication method, wherein the method comprises:
sending first configuration information, wherein the first configuration information is for determining N first parameter sets and one second parameter set, the second parameter set is a common parameter set of the N first parameter sets, the first parameter set comprises one or more parameters for determining a cycle and/or an offset, and N is an integer greater than or equal to 2; and
sending second configuration information, wherein the second configuration information indicates a terminal device to use at least one of the N first parameter sets.

15. The method according to claim 14, wherein the periodicity is a discontinuous reception DRX cycle.

16. The method according to claim 14 or 15, wherein the second configuration information is configured by using downlink control information DCI signaling.

17. A communication method, wherein the method comprises:
sending first configuration information, wherein the first configuration information is for determining one first parameter set and one second parameter set, and the first parameter set comprises one or more parameters for determining a periodicity and/or an offset; and
sending second configuration information, wherein the second configuration information is for determining one third parameter set, the third parameter set comprises one or more parameters for determining a periodicity and/or an offset, and the second parameter set is a common parameter set of the first parameter set and the third parameter set.

18. The method according to claim 17, wherein a periodicity in the first parameter set and a periodicity in the third parameter set are discontinuous reception DRX cycles.

19. The method according to claim 17 or 18, wherein the second configuration information is configured by using downlink control information DCI signaling.

20. A communication method, wherein the method comprises:
sending first configuration information, wherein the first configuration information comprises M parameters, and M is an integer greater than or equal to 1; and
sending second configuration information, wherein the second configuration information comprises L parameters, L is an integer greater than or equal to 1, and the M parameters and the L parameters are for determining an active period in a first time domain resource.

21. The method according to claim 20, wherein the M parameters are comprised in a first parameter group, and the L parameters are comprised in a second parameter group; and
parameters comprised in the first parameter group are completely different from parameters comprised in the second parameter group, or parameters comprised in the first parameter group are partially different from parameters comprised in the second parameter group.

22. The method according to claim 21, wherein
a periodicity comprised in the first parameter group is the same as a periodicity comprised in the second parameter group, or a periodicity comprised in the first parameter group is different from a periodicity comprised in the second parameter group; and/or
an offset comprised in the first parameter group is different from an offset comprised in the second parameter group.

23. A communication method, wherein the method comprises:
receiving capability information, wherein the capability information is for determining that a terminal device supports a case that one piece of configuration information corresponds to one periodicity, or the capability information is for determining that a terminal device supports a case that one piece of configuration information corresponds to a plurality of periodicities; and
sending first configuration information based on the capability information, wherein the first configuration information is for determining a parameter.

24. The method according to claim 23, wherein the capability information is further for determining that the terminal device supports at least one of the following:
there are a plurality of discontinuous active periods in one periodicity;
K parameter groups, wherein parameters in the K parameter groups are for determining an active period in a first time domain resource, there are at least two parameter groups in the K parameter groups, and parameters comprised in one of the two parameter groups are completely different from parameters comprised in the other parameter group, or parameters comprised in one of the two parameter groups are partially different from parameters comprised in the other parameter group;
a periodicity comprised in a parameter in the first configuration information is determined based on a first periodicity and an offset of the first periodicity; and
the parameter in the first configuration information is predefined.

25. The method according to claim 24, wherein
a periodicity comprised in one of the two parameter groups is different from a periodicity comprised in the other parameter group, or a periodicity comprised in one of the two parameter groups is the same as a periodicity comprised in the other parameter group; and/or
an offset comprised in one of the two parameter groups is different from an offset comprised in the other parameter group.

26. The method according to any one of claims 23 to 25, wherein the capability information is further for determining at least one of the following:
a frame rate of a video service supported by the terminal device;
a minimum frame rate of a video service supported by the terminal device; and
a maximum frame rate of a video service supported by the terminal device.

27. A communication apparatus, wherein the communication apparatus comprises a module configured to perform the method according to any one of claims 1 to 26.

28. A communication apparatus, comprising a processor, wherein the processor invokes a computer program stored in a memory, to implement the method according to any one of claims 1 to 26.

29. A computer-readable storage medium, wherein the computer-readable storage medium stores a computer program, and when the computer program is run, the method according to any one of claims 1 to 26 is implemented.

30. A computer program product comprising instructions, wherein when the computer program product runs on a computer, the method according to any one of claims 1 to 26 is performed.
